(19) Europäisches Patentamt

European Patent Office

Office européen des brevets

(11) Veröffentlichungsnummer: **0 212 391 B1**

(12) **EUROPÄISCHE PATENTSCHRIFT**

(45) Veröffentlichungstag der Patentschrift: **03.06.92**

(21) Anmeldenummer: **86110650.8**

(22) Anmeldetag: **01.08.86**

(51) Int. Cl.⁵: **C11B 1/04**, A23K 1/14, B30B 9/12

(54) Verfahren und Vorrichtung zur thermischen Konditionierung und zur thermischen Vorbehandlung von Ölsaaten und Ölfrüchten, insbesondere Leguminosesamen.

(30) Priorität: **14.08.85 DE 3529229**
          **14.12.85 DE 3544298**

(43) Veröffentlichungstag der Anmeldung:
**04.03.87 Patentblatt 87/10**

(45) Bekanntmachung des Hinweises auf die Patenterteilung:
**03.06.92 Patentblatt 92/23**

(84) Benannte Vertragsstaaten:
**BE DE FR GB IT NL SE**

(56) Entgegenhaltungen:
**US-A- 3 255 220**
**US-A- 4 384 837**

(73) Patentinhaber: **Amandus Kahl Nachf. (GmbH & Co.)**
**Dieselstrasse 5-9**
**W-2057 Reinbek(DE)**

(72) Erfinder: **Amandus Kahl Nachf. (GmbH & Co.)**
**Dieselstrasse 5-9**
**W-2057 Reinbek(DE)**

(74) Vertreter: **Glawe, Delfs, Moll & Partner Patentanwälte**
**Liebherrstrasse 20**
**W-8000 München 26(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft ein Verfahren und eine Vorrichtung zur thermischen Konditionierung von Ölsaaten und Ölfrüchten, insbesondere Leguminosesamen und verwandten pflanzlichen Rohstoffen, wobei dieses Material gegebenenfalls nach Reinigung, Trocknung und Mahlung einem Extraktions- und/oder Preßvorgang unterworfen und nach Trennung und Aufarbeitung ein für Speisezwecke geeignetes Öl bzw. Fett sowie ein als Kraftfutter verwertbarer Rückstand, das Schrot, erhalten wird und dem Extraktions- und/oder Preßvorgang eine Konditionierung vorgelagert ist.

Neben einem einwandfreien, d.h.blanken und farbstabilen Öl bzw. Fett - im folgenden nur noch Öl genannt - sind die nach der Ölabtrennung verbleibenden festen Rückstände, die Extraktionsschrote oder -mehle und Preßkuchen von größter wirtschaftlicher Bedeutung als eiweißreiche Kraftfutter, deren Futterwert einen wesentlichen Faktor bei der Zugrundelegung der Betriebskosten und Verarbeitungskosten der Ölsaaten darstellt.

Charakteristisch für die Beurteilung der Qualität von z.B. Soja-Extraktionsschroten als Futtermittel ist einmal der Gehalt an löslichen, d.h. leichtverdaulichen Proteinen (Eiweißstoffe), deren Gehalt möglichst über 45% liegen soll und zum anderen ein Minimum an Enzymaktivität (Ureaseaktivität), die - gemessen in N/g/min/30ºC - einen Wert von 0,3 nicht überschreiten darf.

Es gehört zum allgemeinen Stand der Technik, bei der Gewinnung von Speiseölen und -fetten aus Leguminosesamen, z. B. aus Sojamaterial, dieses vor der Extraktion mit Lösemitteln einer thermischen Behandlung zu unterwerfen, um die Verfahrensstufen der Öl- bzw. Fettreinigung wie Entlezithinierung, Entschleimung, Raffination, Desodorierung, Neutralisation, Destillation usw. zu entlasten, oder auf Bereiche dieser Verfahrensstufen ganz zu verzichten.

Durch eine derartige thermische Behandlung des Rohmaterials vor der Extraktion oder der Kombination aus Pressen und Extrahieren können eine Vielzahl im Endprodukt (Öl, Fett, Schrot) unerwünschte Begleitstoffe schon frühzeitig auf ein Minimum reduziert werden. Dabei werden Harnstoffverbindungen abgebaut, Oxidasen unwirksam gemacht, der für die Extraktion bedeutungsvolle Wassergehalt eingestellt, Schalenmaterial durch Quellung gelockert oder entfernt, die Viskosität des Öls bzw. Fetts durch Aufschmelzen erniedrigt und Eiweißstoffe koaguliert.

Bei einem vorbekannten Behandlungsverfahren (US-A-4 384 837) wird fein verteiltes Material verarbeitet, das mit Hilfe einer Schnecke komprimiert und mechanisch bearbeitet wird. Es ist dabei nur eine verhältnismäßig geringe Erwärmung, wie sie durch Reibung auftritt, vorgesehen. Der Austritt erfolgt durch einen Spalt zwischen dem Schneckengehäuse und einer Verdickung des Schneckenendes.

Bei einem weiteren vorbekannten Verfahren (DE-A-3 255 220) erfolgt ebenfalls eine Verarbeitung von fein verteiltem Material. Die Behandlungszeit beträgt trotzdem ca. 30 bis 120 Sekunden. Es werden auch nur Temperaturen angestrebt, die nur wenig über dem Siedepunkt von Wasser liegen, wobei der mechanische Druck den Dampfdruck im Material weit übersteigt, so daß die Feuchtigkeit im Material "flüssig" bleibt. Der Austritt des Materials erfolgt über eine Lochmatrize.

Die Aufgabe der Erfindung besteht in der Schaffung eines Verfahrens und einer Vorrichtung, bei der die gewünschte Konditionierung schneller und wirksamer durchgeführt werden kann.

Die erfindungsgemäße Lösung besteht bei einem Verfahren der eingangs genannten Art, bei dem das Material kurzzeitig auf Temperaturen über 100°C und überatmosphärischem Druck in sauerstoffreier, insbesondere wasserdampfhaltiger Atmosphäre erhitzt wird, darin, daß die Behandlungszeit für die thermische Konditionierung, die bei 2,0 bis 2,5 bar durchgeführt wird, zwischen 0,1 und 5,0 Sekunden liegt und das Material nach Ablauf der vorgegebenen Zeitspanne schlagartig entspannt und auf Temperaturen unter 100°C abgekühlt wird.

In Abhängigkeit von der Natur des Rohmaterials, insbesondere von dessen Öl- bzw. Fettgehalt, liegt die Konditionierungstemperatur gemäß der Erfindung insbesondere bei 105 bis 148°C, insbesondere bei 118 bis 135°C.

Der Druck beträgt dabei, d.h. vor der schlagartigen Entspannung, insbesondere 4 bis 18 bar und bevorzugt 3 bis 6 bar.

Die vorstehend aufgeführten Betriebsdaten für das neue (thermische) Konditionierverfahren können untereinander vielfach variiert werden.
So liegt die Behandlungszeit bei hohen Temperaturen, z. B. von 140 bis 148°C, bei wenig über 1 Sekunde. Der Druck sollte hier etwa 4,0 bis 8,0 bar betragen. Bei relativ niedrigen Temperaturen, etwa bei 110 bis 120°C sind Behandlungszeiten zwischen 2 und 4 Sekunden erforderlich, um die vorstehend definierte Aufgabe zu lösen.

Von Bedeutung ist, daß das neue Verfahren in möglichst luft- bzw. sauerstofffreier Umgebung durchgeführt wird. Diese Forderung wird bei gleichzeitigem Druck- und Temperaturaufbau am zweckmäßigsten durch Wasserdampf erfüllt, der bis zur spontanen Entspannung auf Atmosphärendruck oder darunter bei gleichzeitiger Abkühlung auf Temperaturen unter 100°C, insbesondere bis 60°C, d. h. auf Extraktionstemperatur, bevorzugt die Umgebungsatmosphäre 1,2 bis 1,3 bar bildet. Gleichzeitig wird durch Wasserdampf auch der Feuchtigkeitsgehalt des zu behandelnden Materials reguliert bzw. eingestellt.

Durch des neue Verfahren der Hochtemperatur-Hochdruck-Konditionierung mit schlagartiger Entspannung in luft- bzw. sauerstofffreier Atmosphäre werden folgende Ergebnisse erzielt:

Die Urease wird abgebaut bzw. ihre Aktivität inhibiert, bedingt durch die Erhitzung auf die angegebenen hohen Temperaturen.

Die Proteine werden aufgrund der kurzen Erhitzungszeiten bei erhöhten Drucken weder abgebaut, noch wird die Wasserlöslichkeit wesentlich verringert.

Harnstoffverbindungen werden auf ein Minimum reduziert. Stabile Harnstoffe nicht angegriffen.

Durch vorstehende Vorteile wird die Qualität des Schrots insgesamt verbessert.

Betriebliche Fortschritte sind einmal ein stark herabgesetzter Energieaufwand aufgrund der kurzen Verweilzeiten, größere Extraktions- (und ggf. Preß-) leistung durch verbesserte Perkolationsgeschwindigkeit, damit insgesamt Erhöhung der Anlagenkapazität, geringerer Restphosphatidgehalt im Reinöl nach der Entschleimung bzw. -fett, Entlastung den Trockners/Toasters in der Schrotaufbereitung.

Die Einschaltung der Konditionierstufe in ein Verfahren zur Fett- und/oder Öl-Gewinnung aus Ölsaaten und Ölfrüchten durch Extraktion und/oder Pressung kann in Abhängigkeit vom eingesetzten Rohmaterial, insbesondere von dessen Öl- bzw. Fettgehalt, in unterschiedlichen Positionen erfolgen.

Eine Vorrichtung zur Durchführung des Verfahrens zeichnet sich dadurch aus, daß sie aus einem geschlossenen System besteht, mit hintereinander angeordneter Materialeinzugszone bzw. Druckaufbauzone, Hochdruckzone und Entspannungszone, mit Einrichtungen zur kontinuierlichen Materialaufgabe, mit Einlaßdüsen für Wasserdampfatmosphäre in der Materialeinzugs- bzw. Druckaufbauzone, mit Einlaßdüsen für Hochdruckwasserdampf in der Hochdruckzone, mit die jeweiligen Zonen in Materialdurchlaufrichtung verbindenden Förderelementen, und mit einer druckaufbauenden Förderschnecke, Extruder oder Expander für die Druckaufbauzone und die Hochdruckzone, wobei sich die Ganggrößen der Schneckenwindungen von der Druckaufbauzone in Richtung der Hochdruckzone stufenweise verjüngen und sich der Übergang von der größten Ganggröße in die kleinste Ganggröße in der Druckaufbauzone befindet, mit Einrichtungen für kontinuierlichen Materialabzug und mit einem Anpreßkopf mit Gegendruckelement am Austragsende der Hochdruckzone.

Eine weitere Vorrichtung zur Durchführung des Verfahrens zeichnet sich dadurch aus, daß sie aus einem geschlossenem System besteht, mit hintereinander angeordneter Materialeingangs- bzw. Druckaufbauzone, Hochdruckzone und Entspannungszone, mit Einrichtungen zur kontinuierlichen Materialaufgabe, mit Einlaßdüsen für Wasserdampfatmosphäre in der Materialeingangs- bzw. Druckaufbauzone, mit Einlaßdüsen für Hochdruckwasserdampf in der Hochdruckzone, und mit die jeweiligen Zonen in Materialdurchlaufrichtung verbindenden Förderelementen, die gleichzeitig auch als Druckaufbauzonen dienen und die als Schnecken oder Preß-Schnecken oder als expanderähnliche Schnecken ausgebildet sind, während die Hochdruckzone als zylindrischer Druckbehälter vorliegt, mit Einrichtungen für kontinuierlichen Materialabzug und mit Einlaßdüsen für Wasserdampfatmosphäre auch in der Entspannungszone, die mindestens eine Förderschnecke aufweist.

Beide Ausführungsformen zeichnen sich gegenüber dem Stand der Technik dadurch aus, daß sie als geschlossenes System mit Einrichtungen für kontinuierlichen Materialabzug aus-gebildet sind. Bei der erstgenannten Ausführungsform ist ein Anpreßkopf mit Gegendruckelement vorgesehen, wobei vorteil-hafterweise der Gegendruck und damit der Druck innerhalb der Vorrichtung reguliert werden kann. Insbesondere kann ein Anpreßkopf vorgesehen werden, der über einen einstellbaren Gegendruck P'' die Austrittsöffnung des Expanders bzw. die Öffnung der Matritze solange verschlossen hält, bis der Druck P im Expander den Gegendruck P'' des Anpresskopfes übersteigt, wodurch sich der Anpresskopf von der Expanderaustrittsöffnung bzw. Matritzenöffnung löst und damit den Austritt des Materials aus dem Expander freigibt.

Anschließend bleibt der Austrittsspalt zwischen Anpresskopf und Expander- bzw. Matritzenöffnung solange geöffnet, bis der Druck P im Expander auf wenig unterhalb des Gegendrucks P'' abgefallen ist. Der Gegendruck P'' führt nun den Anpresskopf wieder in Verschlußstellung, sodaß weiterer Materialaustritt verhindert wird. Bei einem Abfall der Arbeitsleistung im Expander bleibt der Austrittsspalt zwischen Expander- bzw. Matritzenöffnung einerseits und Anpresskopf andererseits nur soweit geöffnet, daß der einmal eingestellte bzw. geregelte Gegendruck P'' unverändert erhalten bleibt.

Die Einstellung des Gegendrucks P'', also desjenigen Drucks, mit dem der Anpresskopf auf der Expander- bzw. Matritzenöffnung aufliegt, kann sowohl mechanisch über Federelemente erfolgen, doch können auch alle andern geeignete Elemente für diesen Zweck herangezogen werden, vorausgesetzt, daß sie eine druckabhängige Bewegung des Anpresskopfs ermöglichen.

Insbesondere sind pneumatische und hydraulische Bewegungsantriebe geeignet; auch eine elektromagnetische Druckbeaufschlagung am Anpresskopf ist praktisch von Vorteil.

Der Anpresskopf kann in Abhängigkeit von seiner direkten Funktion, der Art der Bewegung und Druckbeaufschlagung (Art des Antriebs) sowie der Konfiguration der Expanderöffnung verschieden ausgelegt sein. Entscheidend ist allein, daß beim Anpressen der Expanderausgang vollkommen und absolut dicht verschlossen ist, damit sich der Verfahrensdruck P im Expander optimal aufbauen Kann, und sich die erforderliche Druckdifferenz P→P'' unter gewünschten Betriebsbedingungen ungestört einstellt. Dies gilt auch für den Fall, daß kein Verarbeitungsmaterial dem Expander zugeführt wird.

Der Anpresskopf kann z.B. kugel- oder halbkugelförmig, konisch, kegelförmig, flach, spitz oder als Kreissegment ausgebildet sein, je nach Form der zu verschließenden Austrittsöffnung am Expander bzw. der diesem nachgeschalteten Matritze.

Weitere vorteilhafte Ausführungsformen sind in den Unteransprüchen angegeben.

Die Erfindung wird im folgenden anhand von vorteilhaften Ausführungsformen unter Bezugnahme auf die beigefügten Zeichnungen beschrieben. Es zeigen:

| | |
|---|---|
| Fig. 1 bis 4 | schematische Darstellungen von Verfahren der Erfindung; |
| Fig. 5 | eine besonders vorteilhafte Vorrichtung zur Durchführung des Verfahrens nach den Fig. 1 bis 4; |
| Fig. 6 | eine andere vorteilhafte Vorrichtung; |
| Fig. 7 | den grundsätzlichen Aufbau eines zum Konstanthalten des Austrittsdrucks geeigneten Anpreßkopf gemäß vorliegender (Zusatz-)Erfindung mit einer Tellerfeder als das den Gegendruck P'' erzeugende Element; |
| Fig. 7a | den Anpreßkopf nach Fig.3 im Schnitt; |
| Fig. 8 | verschiedene konfigurative Ausbildungsmöglichkeiten der Verschlußfläche des Anpreßkopfs; |
| Fig. 9 | eine besonders vorteilhafte und betrieblich bewährte Ausführungsform der Erfindung mit hydraulischer Erzeugung des Gegendrucks P''; und |
| Fig.10 | eine Vorrichtung zur thermischen Vorbehandlung. |

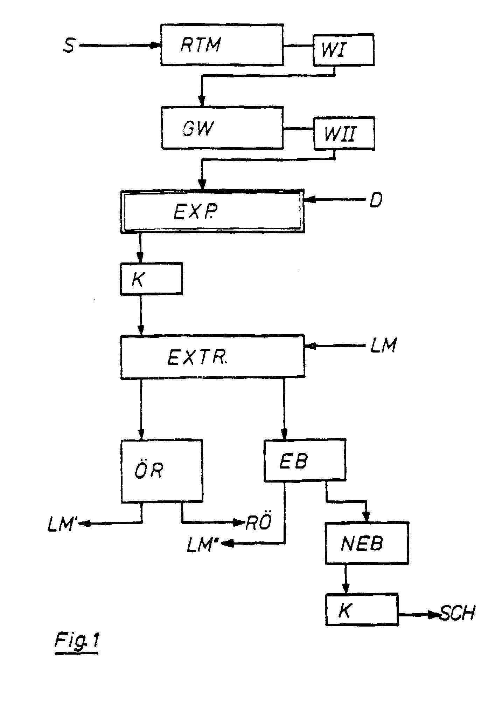

Das in Figur 1 dargestellte, allgemein gültige Fließschema zeigt den Verfahrensablauf für Saatgut mit niedrigem bis mittlerem Ölgehalt, etwa in der Größenordnung zwischen 17 und 45 Gew.-%. Es ist besonders geeignet für Verfahren ohne Pressung, also Öl- bzw. Fettgewinnung allein durch Extraktion mit Lösemitteln.

Geeignete Rohmaterialien sind:
Sonnenblumenkerne, Sojabohnen, Baumwollsaat, Bucheckern, Hanfsaat, Leinsaat, Raps.

Das Saatgut (S) wird zunächst in bekannter Weise gereinigt, getrocknet und gemahlen (RTM), auf ca. 40 - 60°C angewärmt (WI), glattgewalzt (GW), weiter angewärmt auf 80 - 95°C (WII) und in den zur Durchführung des erfindungsgemäßen Verfahrens besonders geeigneten Expander (EXP.) eingeführt. Durch Dampfzufuhr (D) erfolgt die kurzzeitige Hochtemperatur- Hochdruckbehandlung mit anschließender schlagartiger Entspannung in einen Trockner/Kühler (K). Dieser bisher beschriebene Vorgang ist vollkontinuierlich.

Die weiteren Verfahrensschritte sind Stand der Technik und bestehen aus Extraktion (Extr.) mit Lösemittel (LM), Ölgewinnung (ÖR) bestehend aus Reinigung, Entlezithinierung, Destillation usw. und Gewinnung des Reinöls (RÖ) neben Lösemittel (LM') , das zur Extraktion zugeführt wird, indirekte Entbenzinierung des Schrots (EB), direkte Dampfentbenzinierung (NEB), Schrotkühlung (K) und Schrotgewinnung (SCH).

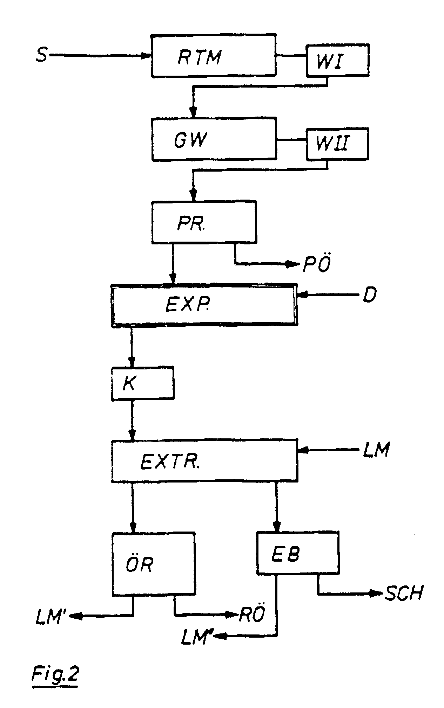

Das in Fig. 2 dargestellte Schema eignet sich besonders für Rohmaterialien mit sehr hohem Öl- bzw. Fettgehalt, so daß eine Pressung vor der Extraktion erforderlich wird. Derartige Rohmaterialien sind:
enthülste Erdnüsse, Haselnußkerne, Mandeln, Kerne von Ölpalmen, Sesamsaat und Walnußkerne.
Die Stufen (RTM), (WI), (GW), (WII) haben die gleiche Bedeutung wie in Figur 1.
Gemäß Fig. 2 ist nun vor der Konditionierung gemäß Erfindung (EXP.) die Pressung (PR.) des Rohmaterials unter Gewinnung des Preßöls (PÖ) eingeschaltet. Die verbleibenden Schritte wie Extraktion (EXTR.), Ölreinigung (ÖR), Entbenzinierung (EB) usw. entsprechen wieder dem Verfahrensablauf nach Fig. 1.

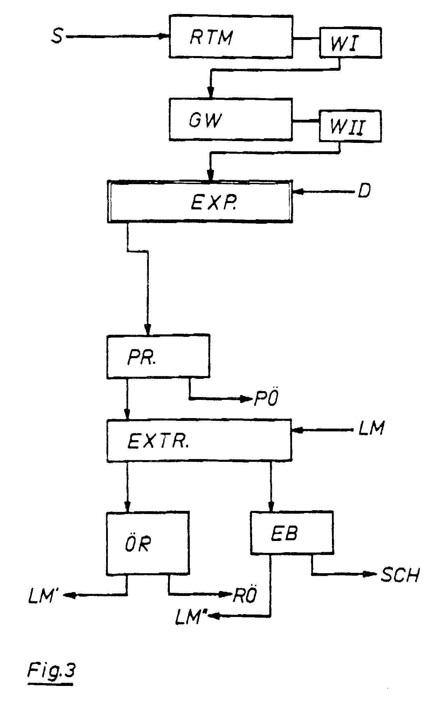

Es ist erfindungsgemäß auch möglich, die (thermische) Konditionierung gemäß der Erfindung der Pressung vorzuschalten. Dies ist dann angezeigt, wenn der Hauptölanteil bereits beim Pressen gewonnen wird, d. h. hochölhaltiges Rohmaterial, wie z. B. Oliven, Ölpalmfrüchte, Kakaosamen, Cocos u. a. Das Verfahren nach Fig. 3 kann aber auch in Kombination aus Pressen und Extrahieren auf Rohstoffe mit hohem Ölgehalt und Schalenmaterial angewendet werden.

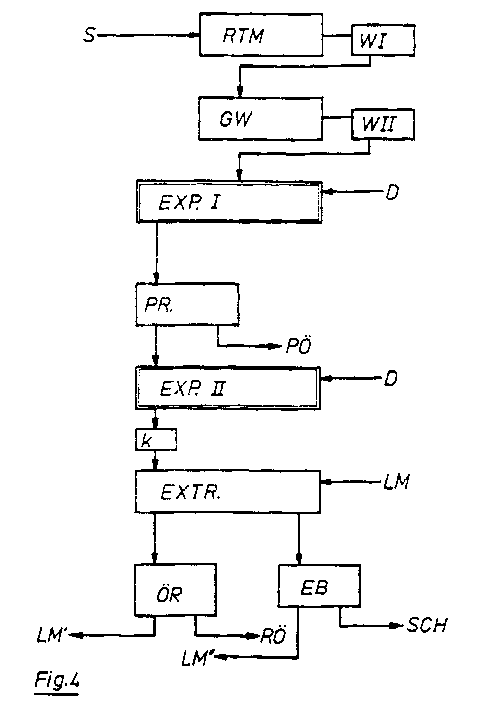

Insbesonde für Raps, Baumwollsaat und Leinsaat mit bis zu 45 Gew.% Öl (in Fleisch und Schale) hat sich ein Verfahren nach Fig. 4 bewährt, bei dem das glattgewalzte Material zunächst unter relativ milden Bedingungen gemäß der Erfindung (thermisch) konditioniert (EXP. I), dann das warme bzw. heiße Material gepresst (PR.) unter Gewinnung von Preßöl (PÖ), bei gesteigerten Bedingungen der Preßkuchen aus (PR.) erneut (thermisch) konditioniert (EXP.II), gekühlt (k) und schließlich in bekannter Weise extrahiert wird (EXTR.). Hierdurch gelingt es, den Ölgehalt in der Schale optimal zu gewinnen und eine klare Trennung von Preßöl (PÖ) aus dem Fleisch und Extraktionsöl (RÖ) aus der Schale zu erreichen. Bei allen vorstehend genannten Möglichkeiten wird auch das Lösemittel aus der Entbenzinierung in die Extraktion zurückgeführt (LM").

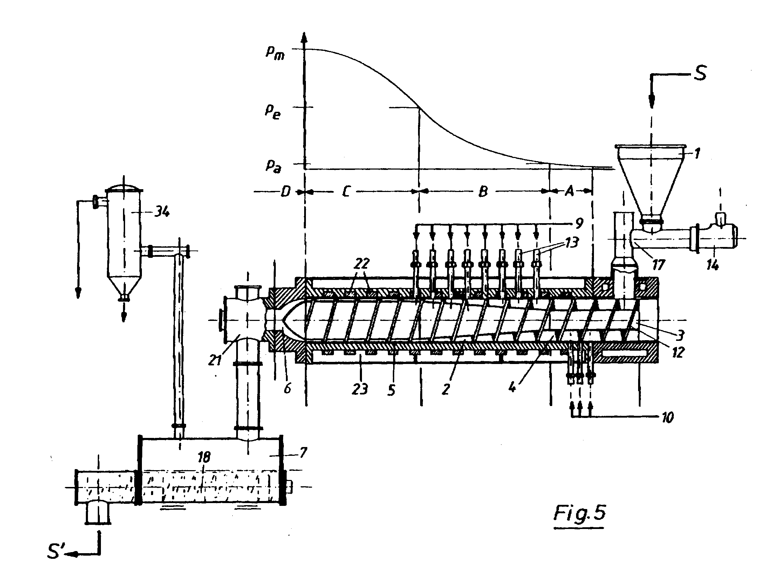

Die für die Durchführung des erfindungsgemäßen Verfahrens zur thermischen Konditionierung besonders geeignete Vorrichtung bzw. Anlage nach Fig. 5 arbeitet in Anlehnung an das Prinzip der Ein- oder Mehr-Schneckenpressen wie sie aus der Lebensmittel-, Kunststoff- und Arzneimittel-Technologie bekannt sind.

Das mit Hilfe eines geeigneten Dosier- und Steuergeräts (14) über den Einfülltrichter (1) eingebrachte Material (S), das in Übereinstimmung mit Figuren 1 - 4 gereinigt, getrocknet, gemahlen, erwärmt und ggf. glattgewalzt wurde, z. B. Sojabohnenplättchen von 0,4 bis 0,6 mm Dicke, gelangt über den Stutzen (17) im kontinuierlichen Fluß in die Einzugszone (A) des aus Wanne und Schneckenwelle (3) gebildeten, druckaufbauenden Systems und durchwandert diesen durch die Kompressionszone (B) und die Hochdruckzone (C) bis zur Dekompression bzw. Expansion in (D), nachdem ein Optimaldruck ($P_m$) erreicht wurde.

Im Bereich der Einzugszone (A) befinden sich eine oder mehrere Einlaßdüsen für Wasserdampf von z. B. 1 - 3 Bar (10), durch die der gesamte Einzugsbereich bis in den Stutzen (17) und darüber hinaus mit einer Wasserdampfatmosphäre beschickt ist. Hierdurch wird erreicht, daß bereits die Einzugszone im wesentlichen luft- bzw. sauerstofffrei ist und oxidierende Beeinflussung des zu konditionierenden Materials ausgeschlossen ist. Der über (10) eingespeiste Dampf verläßt die Zone (A) zum Teil über den Trichter (1), zum andern Teil dringt er innerhalb der Vorrichtung in die Zone (B) ein.

Die über (1) eingeführten Sojabohnenplättchen - an denen im folgenden das neue Verfahren beispielhaft erläutert wird - haben zunächst einen Feuchtigkeitsgehalt von ca. 10 - 12 Gew.-%. Sie werden in der Einzugszone (A) von den Scherelementen (12) erfaßt und beginnen gegen Ende der Zone (A) einen Massedruck aufzubauen. Dieser hat beim Übergang zur Kompressionszone (B) einen Wert ($P_a$) von ca. 0,1 X ($P_m$) und steigt bis in die Hochdruckzone (C) praktisch linear an.

Wie aus Fig. 5 zu ersehen ist, hat die Gangtiefe der Scherelemente (12) im Bereich der Hochdruckzone (C) im Vergleich zur Schneckenbreite einen kleinsten Wert (5), der sich in Richtung Materialzufuhr in Zone (A) erweitert (2,4).

In einer praktischen Betriebsanlage mit Sojabohnenplättchen von D, 52 mm Dicke wurde allein durch die Bedingungen der abnehmenden Gangtiefe in der Zone (B) ein Druck ($P_e$) von 8,5 Bar ermittelt, der bis zum Maximelwert ($P_m$) - d. h. kurz vor Austritt aus der Hochdruckzone (C) in die Expansionszone (D) - auf 10,5 Bar anstieg.

Da die Kompressionszone (B) für den Druckaufbau von entscheidender Bedeutung ist, erfolgt in ihr die Einführung von Hochdruckwasserdampf (9) über ein Mehrfach-Düsensystem (13). Der Druck des Wasserdampfes über (9,13) lag im vorliegenden Fall bei 6 Bar und liegt im allgemeinen zwischen 4 und 10 Bar.

Das kontinuierlich komprimierte Material wird beim stetigen Durchgang durch das Konditioniersystem teils durch den Dampf (9), teils durch zusätzliche Heizelemente (22) auf die vorgesehene Temperatur, im speziellen Falle auf 136°C, aufgeheizt. Gleichzeitig steigt der Wassergahalt auf über 12 %, im speziellen Falle auf 18 bis 20 % an. Gegen Ende der Hochdruckzone (C) hat sich im Gang (5) ein kompaktes, erhitztes und unter Druck stehendes Material gebildet, das über den Scherspalt (6) und Stutzen (21) unter Expansion auf einen Druck im Atmosphärenbereich in die Vorlage (7) austritt. Durch den Übergang von der Hochdruckzone (C) in den Stutzen (21) bzw. in die Beruhigungszone (Vorlage) (7) erfolgt eine spontane, schlagartige Entspannung verbunden mit einer Materialabkühlung auf unter 100°C. Dabei wird die Vorlage bevorzugt geschlossen gehalten und das Material über ein geeignetes Transportsystem, z. B. eine Schnecke (18), die auch expanderartig ausgebildet sein kann, kontinuierlich ausgetragen (S).

Zweckmäßig ist es, die Vorlage (7) an einen Saugstrahler oder ein anderes geeignete Vakuum erzeugendes System (34) anzuschliessen (mit vorgeschaltetem Kondensator), um einmal im Bereich der Gesamtanlage eine Wasserdampfrichtung zum Scherspalt (6) hin auszubilden und zum andern den mit dem expandierten Material (S') in die Vorlage eintretenden Wasserdampf abzuziehen.

Es versteht sich, daß die vorstehend beschriebene Konditionieranlage gemäß der Erfindung vielfacher Änderungen und Verbesserungen unterliegen kann. So können zusätzliche Kühlelemente (23) der Temperaturregulierung dienen, Einfach- und Mehrfachschneckensysteme, gerade oder konisch, Doppelschnecken, Schnecken mit verschiedenen Ganggrößen, unterschiedlichen Scherelementen, eingezogenen Noppen zur Materialumwälzung, solche mit mehr als einer Meteringzone (Zone der Kompression B) usw. sind im vorstehenden Sinne verwendbar.

Darüber hinaus ist das neue Konditionierverfahren nicht an das in Fig. 5 gezeigte System gebunden. Andere, einem allmählichen Druck aufbauende Systeme wie kontinuierliche Mischer, Pumpen, Kolbenelemente usw. sind ebenfalls geeignet, sofern die Erfordernisse des Druckaufbaus, der Inertatmosphäre, des Temperaturaufbaus und der spontanen bzw. schlagartigen Entspannung bzw. Expansion des komprimierten Materials ermöglicht ist, die einer schlagartigen Abschreckung vom Hochdruck-Hochtemperatur auf atmosphärische Bedingungen und unter 100°C ggf. auf Temperaturen von 60 - 90°C bei teilweise unteratmosphärischen Drucken gleichkommt.

Bezüglich des Aufbaus der Anlage nach Fig. 5 ist noch zu sagen, daß sie vollkontinuierlich betrieben werden kann. An den Scherspalt (6) können sich Matritzen zur Formgebung, insbesondere zu Hohlkörpern (Rohrsträngen usw.) anschließen, so daß ein expandiertes Material großer Oberfläche anfällt.

Hierdurch wird nicht nur der Kühl- und Trokkenprozeß im Anschluß an die Vorlage (7) erleichtert, es wird auch bei Extraktionsverfahren die Lösemittelperkolation weiter gefördert.

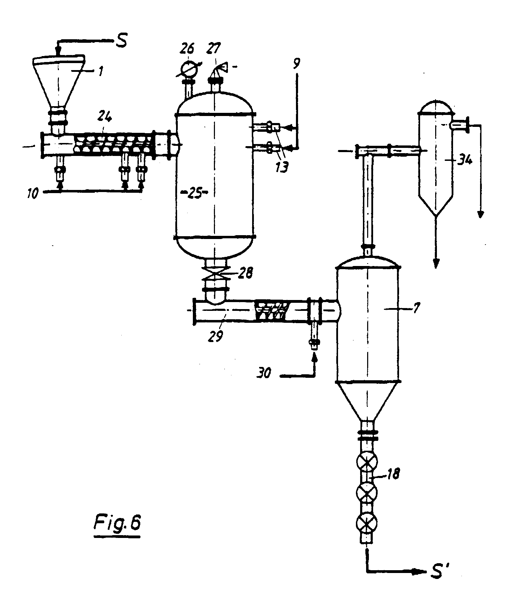

Die in Fig. 6 chematisch dargestellte Anlage arbeitet nach dem gleichen Prinzip wie die Anlage nach Fig. 5, d. h. allmählicher Massedruckaufbau, Übergang zu Hochdruck durch Hochdruckwasserdampf und spontane bzw. schlagartige Entspannung.

Unterschiedlich ist in der Anlage gemäß Fig. 6 die Auslegung des die Hochdruckzone (C) bildenden Behälters, der hier als einfacher Druckbehälter (25) ausgebildet ist.

Das zu konditionierende Material (S) gelangt zunächst über den Trichter (1) ein eine Fördereinheit (24), die bevorzugt als Schnecke bzw. Preß-Schnecke oder als expanderähnliche Förderschnecke ausgebildet ist.

Über Leitung (10) wird auch hier - wie bei der Anlage nach Fig. 5 - sowohl dar Trichter (1) als auch der diesen mit der Einheit (24) verbindende, ggf. ein - nicht dargestelltes - Dosier- und Regelsystem aufweisende Stutzen mit Spüldampf beschickt, um eine möglichst luft- bzw. sauerstofffreie Atmosphäre zu schaffen.

Die Einheit (24) bildet im Prinzip die Einzugszone (A) nach Fig. 5. Sie leitet weiter in die Kompressionszone (B) und von hier direkt in die eigentliche Hochdruckzone (C), im vorliegenden Falle als Hochdruckgefäß (25) konstruiert.

Das Gefäß (25) (mit Manometer (26) und Sicherheitsventil (27) ausgerüstet) wird über das Mehrfachdüsensystem (13) mit Hochdruckwasserdampf (9) beschickt. Das Druckgefäß (25) kann selbstverständlich auch mit Heiz- und Kühlelementen - nicht dargestellt - ausgerüstet sein.

Durch den Einfluß des Hochdruckwasserdampfes (9) baut sich in (25) die Hochdruckzone (C) auf. Die herrschenden Druck- und Temperaturverhältnisse entsprechen weitgehend den für Fig. 5 abgehandelten Bedingungen.

Die Entspannung bzw. Materialexpansion erfolgt gemäß Fig. 6. - ggf. über ein geeignetes Ventilsystem (28) - in die Vorlage (7), wobei zweckmäßigerweise der Übergang vom Druckgefäß (25) zur Vorlage (7) über eine zweite Fördereinheit (29) erfolgt, die ähnlich wie die Einheit (24) konstruiert sein kann. Es hat sich als vorteilhaft erwissen, auch die Fördereinheit (29) mit Spüldampf zu beschikken (30), um bis zur Erkaltung des Materials eine luftfreie Atmosphäre aufrechtzuerhalten.

Die Vorlage (7) dient als Beruhigungszone, in der sich das Material auf Temperaturen unterhalb 100°C abkühlt, insbesondere bedingt durch das vakuumerzeugende System (34). Dieses sorgt auch dafür, daß Entspannungsdampf aus (25) und Spüldampf über (30) ständig abgeführt wird und somit der Eintritt von Luft bzw. Sauerstoff vollkommen unterbunden ist. Als vakuumerzeugendes System dient zweckmäßigerweise wieder ein Saugstrahler, obwohl jede andere Technologie verwendet werden kann (Vakuumpumpe, Gebläse usw.).

Den Abschluß der Anlage bildet ein geeignetes Austragelement für die Vorlage (7), das beispielsweise durch Srehschleusen (18), aber auch durch Schnecken, entsprechend ausgelegte Schieber, Ventile usw. gebildet sein kann. Das Material (S-) verläßt die Anlage in expandierter, thermisch konditionierter, lockerer Form.

Beispiel: Sojabohnenmaterial mit ursprünglich 12,3 Gew.-% Feuchtigkeit und einem Ölgehalt von 19,75 % wurde in bekannter Weise vorbehandelt und mit einer Temperatur von 56 - 58°C auf Glattwalzen zu Plättchen von 0,52 mm ausgewalzt.

Bei bisher bekannt gewordenen klassischen Verfahren liegt die Dicke der Walzplättchen bei ca. 0,25 - 0,3 mm Stärke.

Unter den vorstehend genannten Bedingungen konnten in einem Einschnecken-Expander von ca. 3000 mm Länge (Zonen A + B + C) pro Minute ca. 350 kg des Materials konditioniert werden.

Die Maximaltemperatur beim Übergang von (C) nach (D) lag bei 136°C; der Maximaldruck ($P_m$) betrug 10,5 Bar, die Expansion bei gleichzeitiger Abkühlung auf 96°C in die Vorlage (7) erfolgte innerhalb eines Bruchteils von einer Sekunde. Nach Erkalten und kurzer Nachtrocknung lag der Wassergehalt das leicht bröckligen Materials bei 11,1 %. Das Schüttgewicht betrug etwa 480 bis 520 kg/m$^3$.

Dieses Material lieferte - nach Extraktion mit Hexan, Lösemittel- und Schrotabtrennung - ein entschleimtes und physikalisch gebleichtes Öl mit einem Gesamtphophorgehalt von 0,2 ppm. Die Ureaseaktivität im getoasteten Schrot wurde mit 0,022 (mg N/g/min/30°C) gemessen. Die Proteinlöslichkeit lag bei 75 %.

Die Bestimmung des wasserlöslichen Proteins erfolgte über die Ermittlung der PDI-Zahl (Protein Dispersibility Index). Die PDI-Zahl ist durch diejenige Menge an Stickstoff gegeben, die bei schnellem Rühren oder Zentrifugieren unter Standardbedingungen in Lösung geht. Sie liegt im allgemeinen um einige Einheiten höher als die durch Ermittlung der NSI-Zahl (Nitrogen Solubility Index) erhaltenen Werte.

Unabhängig von der Analysenmethode werden bei den erfindungsgemäß hergestellten Schroten Gehalte an wasserlöslichem Protein gefunden, die vergleichsweise doppelt so hoch sind als die nach konservativen Verfahren, d.h. ohne die thermische Konditionierung im Sinne der Erfindung erhaltenen Produkte aufweisen.

Die Gesamt-Rohölausbeute betrug 99,1 Gew.-% (Restöl im Schrot).

Ein Vergleichsmaterial entsprechender Vorbehandlung mit einer Plättchendicke von 0,25 mm Stärke lieferte ohne die erfindungsgemäße (thermische) Konditionierung einen Schrot mit einem löslichen Proteinanteil von 38 %. Das Schrot hatte trotz Trocknung und Toastung mit identischen Bedingungen wie vorstehend am konditionierten Sojabohnenmaterial vorgenommen, einen stechenden, reizenden, nach Ammoniak riechenden Geruch. Die gemessene Ureaseaktivität lag bei 0,12 mg Stickstoff je Gramm/min/30°C.

Das gleichzeitig erhaltene Öl wies im vorliegenden Falle noch einen Gesamt-Phosphorgehalt von 1,95 ppm auf.

Von Bedeutung ist aber auch die erhebliche Zeitverbesserung durch die erfindungsgemäße Konditionierung, die nur wenige Bruchteile von Sekunden Verweilzeit im Konditionierer erfordert und dadurch eine erhebliche Energieeinsparung bei gleichzeitig gesteigerter Produktion zur Folge hat.

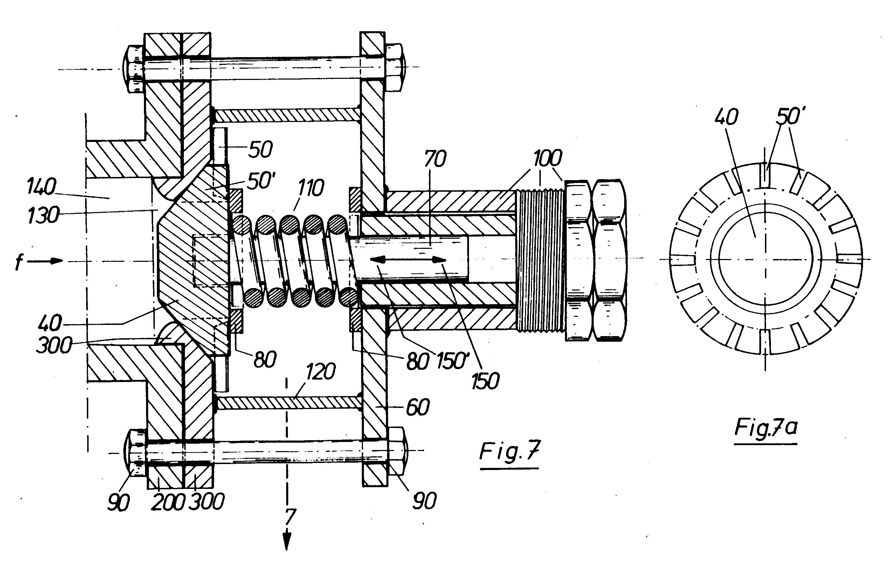

Gemäß Figur 7 besteht die Zusatzvorrichtung aus dem eigentlichen Anpresskopf (40) von gegenüber dem Expanderausgang bzw. der Matritzenscheibe (140, 300) abgeflachter Geometrie. Der Anpresskopf (40) wird über ein Federelement (110), das in Führungsscheiben (80) und um den Kolben (70) gelagert ist, an die Zentralöffnung (130) der Matritzenscheibe (300) angepresst und verschließt dabei während des Aufbaus des Drucks P im Expander -Materialführung aus dem Expander gemäß Pfeil f- den Expanderausgang (140) dichtend ab.

Im einfachsten Falle ist die Matritzenscheibe (300) über Schrauben und Muttern (90) an den Endflansch (200) des Expanders angesetzt. Sie wird außerdem von Stützelementen (120) im Abstand vom Endflansch (60) des Anpresskopfs (40) gehalten. Der Expander selbst ist aus Gründen der Vereinfachung in der Figur 7 nicht dargestellt, da er einmal in Figur 1 in Übereinstimmung mit dem Hauptpatent bereits erläutert wurde und zum andern keinen direkten Einfluß auf die Konstruktion vorliegender Erfindung ausübt. Durch den Endflansch (200) und die Förderrichtung (f) ist jedoch das Austrittsende -Bereich (140)- des Expanders gegeben.

An die Matritzenscheibe (300) können Messer (50) durch Schweissen, Verschrauben usw. angelegt und befestigt sein. Diese dienen der Zerkleinerung des behandelten Materials nach dessen spontanem, durch den Druckabfall von P nach P' bedingten Austritt aus dem Expander über den Austrittsspalt bei zurückgezogenem Anpresskopf (40). Damit das Zurückweichen des Kopfs (40) von der Expanderöffnung ungehindert erfolgen kann, sind Einkerbungen (50') in den Presskopf eingezogen -vgl. auch Fig. 7a- wobei diese so angeordnet sind, daß sie den absolut dichten Verschluß der Expander- bzw. Matritzenöffnung in der Phase des Druckaufbaus P nicht beeinflussen.

Der Anpresskopf (40) mit Federelementen (110) kann über die Verschraubung (90) jederzeit und schnell von Expanderendflansch (200) abgetrennt und -sofern erforderlich- ausgetauscht werden. Auch kann die Feder (110) mit Hilfe der Endverschraubung (100) auf einfachste Weise be- oder entlastet werden, sodaß in Abhängigkeit vom Verfahrensablauf, z.B. von einer notwendig gewordenen Änderung der Verweilzeit des Materials im Expander, von einer gerichteten Steuerung des Fluidgehalts im Material oder weiterer stoffabhängiger Parameter, der Druck P'', d.h. der Gegendruck, während des Verfahrens variiert werden kann.

Während der Druckaufbauphase P im Expander, d.h. bei an die Expanderaustrittsöffnung angelegtem Anpresskopf (40), wird das Material durch die Fördereinheit des Expanders (vgl. Fig.5) in Pfeilrichtung (f) gegen die Matritzenscheibe (300) angedrückt, sodaß ein Materialstau entsteht, der zu dem produktabhängigen, vorher ermittelten bzw. festgelegten Druck P führt. Entsprechend ist das Federelement (110) auf den dem Druck P äquivalenten Gegendruck P'' eingestellt.

Wird nun der Maximal- bzw. Expanderdruck P überschritten, d.h. wird P>P'', so weicht der Anpresskopf (40) in Richtung des Pfeils (150) zurück (gemäß Figur 7 nach rechts), sodaß die Feder (110) zusammengedrückt wird. Durch den nunmehr frei gewordenen Spalt zwischen Anpresskopf (40) und Matritzenscheibe (300) gelangt das schlagartig ausgestoßene Material (Druckentspannung von P nach P') -evtl über die zerkleinernd wirkenden Messer (50)- in die unterhalb des Anpresskopfs angeordnete Auffang- bzw. Expansionsvorlage (7); vgl. Fig.5.

Sobald der Druckabfall P→P' beendet ist, drückt das Federelement (110) den Anpresskopf (40) wieder zurück (in Pfeilrichtung (150') nach links), bis er an der Matritzenöffnung (130) bzw. an der Matritze (300) anliegt und dadurch den Expander verschließt oder nur soweit geöffnet hält, wie Materialmenge anfällt (P ≅ P'') bzw. bis der Übergang von P<P'' zu P>P'' abgeschlossen ist.

Durch entsprechende Auslegung des Federelements (110) kann der Druck P im Expander gesteuert werden. Umgekehrt bestimmt der durch die Sollparameter des Verfahrens (Behandlungszeit, Temperatur, Druck bzw. Hochdruck, Fluidgehalt im Material, Fließfähigkeit, erstrebte Materialqualität, Volumenkapazität des Expanders, Leistung der bewegten Expanderteile usw.) gegebene Maximaldruck P im Expander den für die Verfahrensdurchführung erforderlichen Gegendruck P''.

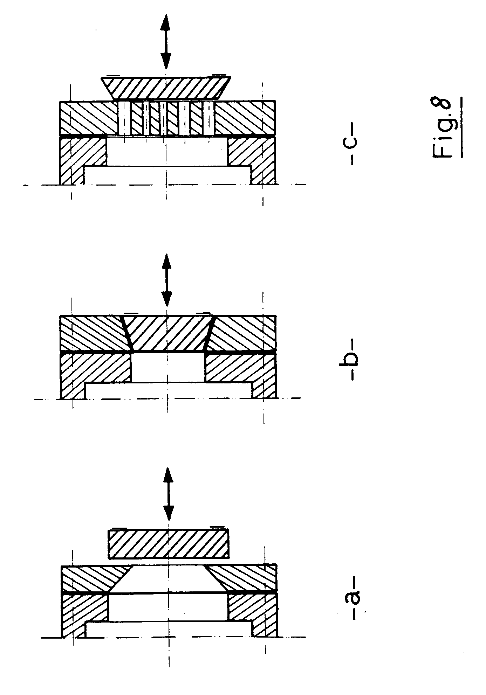

Wie Figur 8 zeigt, kann der Anpresskopf (40) im einfachsten Falle als Scheibe von kreisrundem oder ähnlichem Habitus vorliegen (Fig.8a). Er kann auch als Kegelstumpf (Fig.8b) gegen eine Einlochmatritze bzw. direkt gegen den Expanderauslaß oder als Kegelstumpf usw. gegen eine Vielloch-Matritze (Fig.8c) ausgebildet sein. Die Geometrie sowohl des Presskopfs als auch der evtl. verwendeten Matritze sowie des Endflanschs des Expanders richtet sich nach den Besonderheiten des jeweils spezifischen Verfahrensablaufs, insbesondere nach den rheologischen Eigenschaften des im Expander verarbeiteten Materials.

Auch können der Expander-Maximaldruck P, d.h. der Arbeitsdruck im Expander, bei dem anschließend die spontane Entspannung auf den Druck P' erfolgt, der Massedurchsatz pro Zeiteinheit, die Art und Wirkungsweise des Gegendruckelements, z.B. ob Feder, Hydraulik, Pneumatik usw. die Konstruktion von Anpresskopf, Matritze, Expander-Endflansch und Expander-Austrittsöffnung bestimmen.

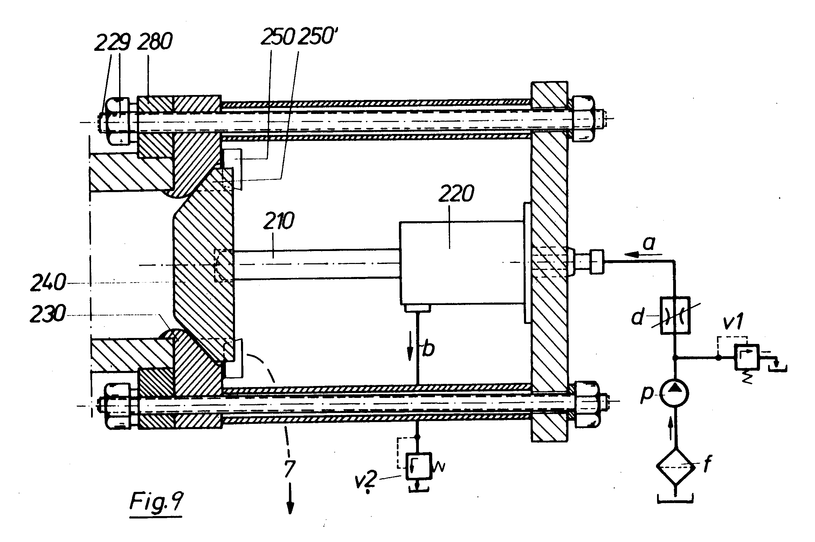

In Figur 9 ist eine weitere, besonders geeignete Variante der erfindungsgemäßen Vorrichtung dargestellt. Sie unterscheidet sich von derjenigen nach Figur 7 durch die Art des Gegendruckelements. Es handelt sich dabei um eine hydraulische Einstellung des Drucks P'' (Gegendruck). Der Anpresskopf (240) liegt bei verschlossener Expanderaustrittsöffnung auf dessen Endflansch (280) bzw. auf der Matritzenscheibe (230) an. Der Gegendruck P'' wird in dieser bevorzugten Ausführungsform der Erfindung durch Hydraulik eingestellt.

Hierzu saugt die Pumpe (p) das Hydrauliköl über das Filter (f) an und fördert es in die Druckleitung (a). Von dieser zweigt eine Leitung zum Druckbegrenzungsventil (v1) ab, während der Hauptölfluß die Drossel (d) passiert. Am Druckventil (v 1) wird der gewünschte Pumpendruck und damit der Gegendruck P'' der Anlage eingestellt. Ein Teil des von der Pumpe geförderten Öls fließt durch die Drossel (d), während das überschüssige Öl über Ventil (v1) in den Ölbehälter (nicht gezeigt) zurückströmt

Die Leitung (a) führt zum Arbeitszylinder in der mit (220) bezeichneten Hydraulik und bewegt hier den Vorschubkolben, der seinerseits die Stange (210) zur Verschiebung des Anpresskopfes (240) -gegen die Matritze (230) oder den Expander-Endflansch (280)- anregt. Da der Vorschubdruck am Vorschubkolben der Hydraulik stets niedriger ist als der Druck der Pumpe (p), ist der Gegendruck P'' höher auszulegen als der Pumpendruck. Das im Vorschubkolben der Hydraulik (220) verdrängte Öl gelangt über Leitung (b) und Gegendruckventil (v2) in den Ölbehälter zurück.

Es versteht sich, daß hier nur eine Möglichkeit der hydraulischen Bewegung des Anpresskopfes skizziert wird. Natürlich kann die vorstehend beschriebene grundsätzliche Arbeitsweise auch mit einer Drosselung im Ölabfluß, mit einem Mehrpumpensystem, mit einem Hydrospeicher oder mit hydromechanischem Vortrieb erfolgen. Auch ist eine direkte Kopplung des Arbeitsdrucks P im Expander mit dem Pumpendruck in (p) -einstellbar über das Druckventil (v1)- gegeben, sodaß mit Hilfe eines geeigneten Regelmechanismus der Hydraulikdruck vom Arbeitsdruck gesteuert wird, bzw. als Funktion des Letzteren sich selbst einstellt. Die Angabe von Einzelheiten derartiger Regelung erübrigt sich, da sie dem Fachmann bekannt ist. Zur Vervollständigung sei noch darauf verwiesen, daß in Figur 5 mit (229) die Halterung des Anpresskopfs (240) mit Hydraulik (220) am Expander-Endflansch (280) - Verschraubung- bezeichnet ist und die Bezugszeichen (250) für die Messer an der Matritzenscheibe (230) bzw. (250') für die Einkerbungen im Anpresskopf (240) stehen.

Beispiel I

In einem Expander mit Schneckenförderung - Austragsrichtung gemäß Pfeil (f) nach Figur 7- von ca. 200 mm Durchmesser und ca. 30 000 mm Gesamtlänge werden pro Stunde ca. 20 000 kg Sojabohnenflocken (Flockenstärke ca. 0,35 mm) in direkter Wasserdampfatmosphäre auf eine Temperatur von ca. 125°C erhitzt und durch Masseeigendruck und Wasserdampfdruck auf einen Arbeitsdruck P von 18 Bar gebracht. Beim Austritt aus dem Expander über eine Einlochmatritze hatte das Material einen Feuchtigkeitsgehalt von ca. 14 Gew.-% und ein Litergewicht von ca. 520 g. Das Material war von weicher, nasser, klebriger Konsistenz. Die Entspannung erfolgte zwar auf ca. Atmosphärendruck, sie war aber nicht spontan im Sinne der gestellten Aufgabe, vielmehr "floß" das nasse Gut im kontinuierlichen, nur gelegentlich durch härtere Einschlüße unterbrochenem Strom in die Entspannungszone (Vorlage 7).

Ganz allgemein zeigte das Gut eine unregelmäßige Wasser- bzw. Feuchteverteilung. Harte, trockene Zonen und nasse Partien lösten einander ab. Zwar hatte die angestrebte thermische Vorbehandlung des Materials stattgefunden, ein einheitliches Material, das direkt der Extraktion zugeführt werden konnte, wurde jedoch nur bedingt erhalten.

Unter gleichen Arbeitsbedingungen des Expanders wurde an den Expander bzw. an die Matritzenscheibe (230 / Fig. 9) ein Anpresskopf (240) angesetzt, der über eine geeignete Hydraulik (220) und Stange (210) gesteuert und auf einen Druck (P'') -Gegendruck- von 18 Bar (Regulierung am Druckventil v1) eingestellt war.

Hierdurch bedingt, baute sich bis nahe der Anpressfläche des Presskopfs (240) im Expander ein allmählich ansteigender, dann aber vor der Anpressfläche sich konstant verhaltender Arbeitsdruck von 18 Bar auf, der nach Erreichen eines Druckwerts von nur wenig über 18 Bar den Anpresskopf gegen den hydraulischen Gegendruck bewegte und hierdurch zwischen Matritzenscheibe (230) und Anpresskopf (240) einen Ringspalt freilegte, durch den das Material in trockener, freifließender, leicht krümeliger, weil durch die Messer (250) zerkleinerter, Form kontinuierlich austrat. Es gelangte in Pfeilrichtung in die in Figur 5 und 6 mit (7) bezeichnete Vorlage.

Der vorstehend wiedergegebene Zustand blieb zunächst völlig konstant, d.h., es wurde über einen längeren Zeitraum Material gleichbleibend optimaler Qualität abgezogen, ohne daß der Produktionsablauf in irgendeiner Form gestört war. Dies bedeutet, daß Druck P und Gegendruck P'' ein Gleichgewichtsverhältnis zueinander eingestellt hatten. Bedingt durch kurzzeitige Materialverzögerung im Expander fiel der Expanderdruck auf 14 - 16 Bar ab. Sofort schloß sich der Expanderausgang durch Vorschub des Anpresskopfs über die Hydraulik und verblieb in diesem Zustand bis sich im Expander der Solldruck von 18 Bar wieder eingestellt hatte und dann kurzfristig und geringfügig überschritten wurde. Der ursprüngliche Zustand war damit wieder hergestellt, d.h., der Verfahrensablauf ungestört.

Entscheidend für die Wirkungsweise des Anpresskopfs bzw. der erfindungsgemäßen Vorrichtung insgesamt ist -wie eingangs bereits gesagt- ein optimales Zusammenwirken der Verfahrensparameter, insbeondere des Fließverhaltens des zu behandelnden bzw. behandelten Materials -dies wiederum eine Funktion der Materialnässe bzw. Feuchtigkeit sowie der Temperatur (bei Materialbehandlung in Dampfatmosphäre)- der Kornbeschaffenheit, der Plastizität, der Expanderleistung usw., wobei natürlich auch und in besonderem Maße die Eckwerte von Temperatur und Druck eine Rolle spielen, da diese die Verfahrensflexibilität bestimmen.

Der weiter vorstehend beschriebene Produktionsablauf wurde bei Sojabohnenflocken über mehrere Tage ohne Zwischenfälle bei den angegebenen Durchsatzmengen und Temperatur/Druck-Verhältnissen verfolgt. Dabei konnte im großtechnischen Maßstab ein im Sinne der gestellten Aufgabe thermisch vorbehandeltes Material erhalten werden das -entgegen dem Arbeiten ohne Verwendung der erfindungsgemäßen Vorrichtungkeine nachträgliche Trocknung oder sonstige Konditionierung erforderte und direkt der Extraktion mit Lösemittel zugeführt werden konnte. Weiter war das Material an offener Luft beliebig lange lagerfähig ohne Veränderung seiner rheologischen und/oder chemischen Eigenschaften, was bei nach andern Vorbehandlungsverfahren oder ohne den erfindungsgemäßen Anpresskopf gewonnenen Produkten erfahrungsgemäß nie der Fall ist.

Insbesondere aber zeigte sich überraschenderweise auch, daß der hier abgeleitete Vorgang der thermischen Konditionierung von für die Extraktion bestimmtem Naturprodukt unter Hochdruck mit Wasserdampf bei Temperaturen über 130°C zu einer erheblichen, vorteilhaften Änderung der Stoffeigenschaften führt.

So wies das bei ca. 66°C durch Extraktion mit Hexan erhaltene Öl nach der Entschleimung nur noch ca. 0,02 Gew.-% Phosphatide auf, während dieser Wert bei sonst gleichem Ausgangsgut, also ebenfalls thermisch vorbehandeltem Material, aber ohne Anwendung der erfindungsgemäßen Vorrichtung am Expander, zwischen 0,3 und 0,6 Gew.-% ermittelt wurde. Ausserdem wurde ein Extraktionsrückstand erhalten, dessen Ureaseaktivität mit 0,02 (mg N/g/min/30°C) gemessen wurde gegenüber 0,12 mg N/g bei herkömmlich erhaltenen Schroten (bestimmt nach Trocknung und Toastung des Rückstands).

Der Einsatz des Anpresskopfs (240) erfolgt in der Vorrichtung zur thermischen Konditionierung von Ölsaaten und Ölfrüchten am Materialsaustragsende des Expanders, d.h. im Bereich des Übergangs vom Scherspalt (6)

Fig. 5 des Hauptpatents- und Stutzen (21) zur Vorlage (7) bzw. am Austragsende des Hochdruckzylinders (25)

Fig.6 im Bereich des Ventilsystems (28) das ggf. über die Fördereinheit (29) zur Vorlage (7) weiterleitet.

Die Art des Einbaus des Anpresskopfs in den Austrittskanal des Expanders bzw. an der Matritzenscheibe oder am Materialaustritt aus dem Hochdruckbehälter (25) ist für die Durchführung des Verfahrens bzw. den Betrieb der Anlage nicht von Bedeutung, solange die Aufgabe des Druckaufbaus gefolgt von spontaner Entspannung erfüllt wird. Da es sich bei der Anordnung des Anpresskopfs um ein rein konstruktives Problem handelt, das jedem Apparatebauer geläufig ist, kann auf eine ins Einzelne gehende Erläuterung verzichtet werden.

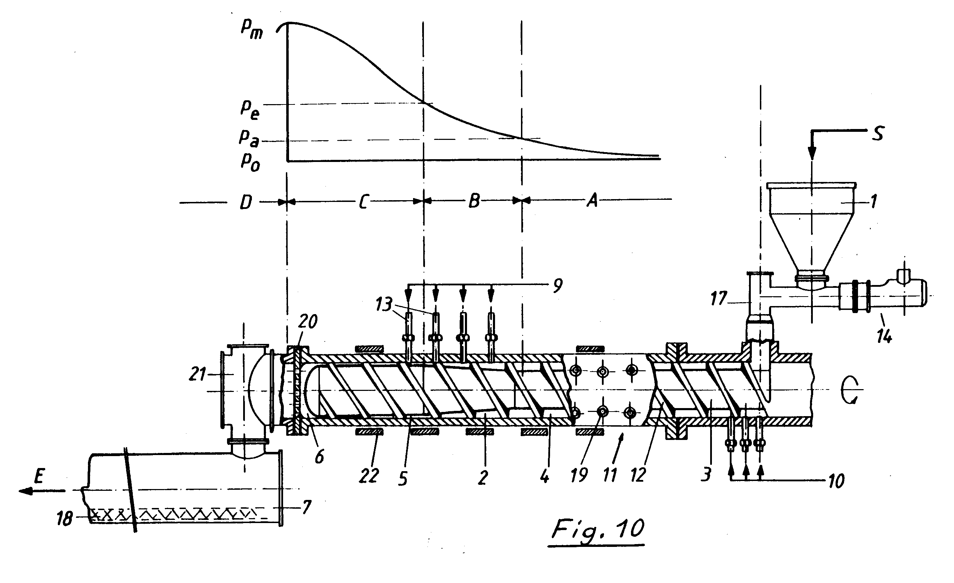

Die in Fig. 10 dargestellte Vorrichtung hat Ähnlichkeit zu der in Fig. 5 gezeigten Vorrichtung, sie arbeitet nach dem Prinzip eines

Expanders, d.h., das Material wird verdichtet, mit Hochdruck-Wasserdampf behandelt und expandiert. Bei diesem Vorgang passiert das über ein geeignetes Dosiergerät (14) und den Einfülltrichter (1) eingebrachte Rohmaterial (S), insbesondere in Form von Walzplättchen von 0,4 bis 0,6 mm Dicke, z.B. vorbereitetes Soja-Glattwalzgut, nacheinander die Einfüll- und Homogenisierzone (A), die Übergangs- bzw. Druckaufbauzone (B), die Maximaldruckzone (C) und die Expandier- bzw. Ausstoßzone (D). Der Durchsatz ist kontinuierlich und wird vom Dosiergerät (14) gesteuert.

Unterhalb des Einführstutzens (17) befinden sich eine oder mehrere Einlaßdüsen für Wasserdampf (10), wodurch die Einfüllzone (A) ständig mit einer Dampfatmosphäre belegt wird. Der Dampf verläßt die Zone (A) teilweise durch den Trichter (1), teilweise gelangt er mit dem Material in die weiteren Stufen der Anlage. Durch diese Maßnahme wird erreicht, daß die Luft in diesem Bereich der Vorrichtung verdrängt und ein praktisch sauerstoffreies System geschaffen wird. Dies ist -wie bereits gesagt- für das neue Verfahren von größter Bedeutung, damit bei der anschließenden Hochtemperaturbehandlung jederart Oxidationsreaktionen ausgeschlossen werden.
Das über den Fülltrichter (1) bzw. die Dosiereinrichtung (14) kontinuierlich eingespeiste Material (S) hat einen Anfangs-Feuchtigkeitsgehalt von ca. 8 bis 12 Gew.-%.

Im Hochdruckzylinder (11) befindet sich eine aus dem Extruderbau entlehnte Schneckenwelle (3) mit Scherelementen (12), die in bestimmten Zonenabschnitten auch als Spirale verlaufen können und somit eine reine Schiebefunktion ausüben. Zusätzlich können auch in Reihe oder versetzt zueinander angeordnete und von außen zugängliche Noppen (19) vorgesehen sein, die eine ständige Materialumwälzung während des Transports durch den Zylinder (11) ermöglichen.

Bereits in der Einfüllzone (A) beginnend, wird bis zum Ende der Zone (B) -und darüber hinaus- bis zum Augenblick der Expansion am Übergang von Zone (C) nach (D) ein Masseeigendruck aufgebaut, der am Ende der Zone (C) seinen größten Wert ($p_m$) von beispielsweise 25 bar erreicht (vgl. auch Diagram in der Figur) Dieser Maximaldruck ist natürlich abhängig von der Art und dem Durchlaßquerschnitt der Matritze (20) -z.B. Anzahl der Bohrungen bei einer Lochscheibe- und der in der Zeiteinheit durchgesetzten Materialmenge.

Am Beginn der Zone (B) liegt der Massedruck (der wie gesagt eine Funktion der Förder- und Mengencharakteristik darstellt) bei ca. 3,0 bis 3,5 bar und erreicht am Ende der Zone (B) einen Wert ($p_e$) von ca. 8 bar.

Da die Zone (B) für den Druckaufbau von entscheidender Bedeutung ist, erfolgt in ihr die Einführung des Hochdruck-Wasserdampfes (9) über mehrere verteilt angeordnete Düsen (13). Diese Dampfeinspeisung ist selbstverständlich geregelt und gesteuert. Aus Gründen der Selbstverständlichkeit sind Meß- und Regelelemente in der Figur nicht eingezeichnet.

Nachdem das Material (S) beim vorstehend angegebenen Massedruck von ca. 8 bar (Übergang Zone (B) nach Zone (C)) mit der für einen Wassergehalt von ca. 12 bis 20 Gew.-% und einer Temperatur (ermittelt im Material) von insbes. 125 bis 140°C erforderlichen Dampfmenge (Wasserdampf mit einem Druck von ca. 4 bis 10 bar) behandelt ist, gelangt es über den Scherspalt (6) durch die Matritze (20) in die Expansions- und Ausstoßzone (D), wo durch Entspannung eine partielle Verdampfung der vom Material aufgenommenen Feuchtigkeit in den Auslaufstutzen (21) und (ggf.) weiter in die Beruhigungszone (7) stattfindet, so daß der erforderliche Endwassergehalt für die Extraktion sich einstellt. Unter Umständen kann eine geringfügige Nachtrocknung zwecks genauer Einstellung des Feuchtigkeitsgehalts im Material -wie er für die Extraktion erforderlich ist- dienlich sein.

Wie der schematisch dargestellt Druckverlauf ($p_o$ bis $p_m$) zeigt, baut sich der Druck ($p_m$) zunächst bei gleicher Ganggröße (4) in der Zone (A) bis auf ca. 10 bis 20 % des des Maximaldrucks ($p_m$) -von z.B. 25 bar- auf, um dann durch die kleiner werdende Ganggröße (2) in der Zone (B) sowie verbleibender, d.h. konstanter Ganggröße (5) in der Zone (C) allmählich den Optimalwert zu erreichen. Die Einspeisung von Hochdruckwasserdampf erfolgt im Bereich der Zone (B), d.h. zwischen den Druckwerten ($p_a$) und ($p_e$), die einen Bereich von ca. 20 bis 30 % des Gesamtdrucks ($p_m$) einschließen.

Hierdurch wird dem Material vor Erreichen des Enddrucks ausreichend Zeit gegeben, die erforderliche Menge Feuchtigkeit aufzunehmen und damit den Temperatur- und Dampfeinfluß in der Zone (C) wieder abzuschwächen. Die Hochdruck-Dampfbehandlung sollte etwa beim Übergang von Zone (B) nach Zone (C) abgeschlossen sein.

Vorteilhaft, jedoch nicht in jedem Falle notwendig, da vom Material abhängig, erfolgt die Expansion des in den Zonen (B) und (C) verdichteten Materials auf Atmosphärendruck direkt im Anschluß an die Matritze (20) -über den Auslaufstutzen (21)- in einen luft- bzw. sauerstofffreien Raum (7) der -allseitig geschlossen- z.B. mit einer kontinuierlich arbeitenden Austragvorrichtung (18) ausgerüstet ist. Es ist vorteilhaft, auch im Raum (7) eine wasserdampfgesättigte oder überwiegend aus Wasserdampf bestehende Atmosphäre aufrecht zu erhalten, bis eine Beruhigung und Abkühlung des expandierten Materials unterhalb ca. 100°C erreicht ist. Erfahrungsgemäß beträgt die Verweilzeit in der Beruhigungseinheit (7) ca. 1 bis 15 Min. in einer drucklosen Dampfatmosphäre. Nach Ablauf der angegebenen Zeit kann das expandierte Gut (E) ausgetragen, ggf. weiter getrocknet und gekühlt, und der Extraktion zugeführt werden.

Die in der Figur dargestellte Vorrichtung ist für die Durchführung des neuen Verfahrens zur thermischen Vorbehandlung von Leguminosesamen für die Ölgewinnung durch Lösemittelextraktion besonders geeignet.

Dabei versteht es sich, daß auch andere oder in der allgemeinen technischen Auslegung vom gezeigten System abweichende Anlagen den gleichen Zweck erfüllen können, sofern die Bedingungen der luft- bzw. sauerstofffreien Atmosphäre, der kontinuierlichen Materialverdichtung, der Hochdruck-Dampfbehandlung bei den angegebenen Drucken und Temperaturen, sowie ausreichende Behandlungszeit realisiert werden können.

Die gezeigte Expansionsvorrichtung ist ebenfalls nicht an die Elemente der Figur gebunden. So können ein- oder mehrstufige Schnecken bzw. Spiralen, z.B. Kaskadensysteme verwendet werden; auch sind Ein- Doppel oder Mehrfach-Schneckensysteme geeignet.

Die sich an den Scherspalt (6) anschließenden Kalibrier- und Formwerkzeuge (Matritzen) (20) können zur Ausbildung von Materialsträngen, Rohrkörper oder sonstige geometrische Formen geeignet sein. Lochscheiben mit einer Vielzahl von Bohrungen, Dornspitze und Dorn usw. dienen ebenfalls der zentrischen Aufweitung des expandierten Materials. Staubüchsen haben zusätzlich die Wirkung der Erhöhung des geometrischen Widerstands. Die Ausbildung von rohrförmigen Materialsträngen hat einen besonderen Vorteil im Hinblick auf die anschließende Trocknung und Kühlung des Materials. Durch kontinuierliches Aufschneiden der Rohrkörper z.B. durch rotierende Messer, wird ein Gut von besonders großer Oberfläche erhalten, das nicht nur den Kühl- und Trocknungsprozess erleichtert, sondern auch die Extraktion (Perkolation). Der Apparateaufwand für diese Stufen wird dadurch erheblich verringert.

Die Vorrichtung kann selbstverständlich mit geeigneten, regelbaren Temperiersystemen(22)für Heizung oder Kühlung ausgerüstet sein, so z.B. durch einen zirkulierenden Ölkreislauf oder eine elektrische Heizeinrichtung. Eine bisher übliche Agglomerierung des Materials (S) vor Eintritt in die thermische Vorbehandlung ist im allgemeinen nicht erforderlich, da die ca. 0,4 bis 0,6 mm starken Flocken (Walzplättchen) z.B. aus Sojabohnen, diesen Vorgang überflüssig machen.

Beispiel II

In einem Einschnecken-Expander der in der Figur dargestellten Konstruktion mit einem Schneckendurchmesse (Zylinderdurchmesser) von D = 320 mm sowie einer Gesamtschneckenlänge von ca. 30D (Zonen A + B + C) wurden stündlich 20.000 kg Sojabohnenflocken (Walzplättchen) von durchschnittlich 0,45 mm Stärke und einem Feuchtigkeitsgehalt von durchschnittlich 10,95 Gew.-% thermisch vorbehandelt und anschließend für die Extraktion bereitgestellt.

Die Eingangstemperatur des Materials (S) betrug im Trichter (1) ca. 55 bis 58°C. Diese Temperatur resultiert aus dem Flockungsprozess auf Glattwalzen.

Vor dem Einbringen des ersten Flockenmaterials, also bei Inbetriebnahme der Anlage, wurde über Leitung (10) solange Wasserdampf von Atmosphärendruck eingesprüht, bis im Bereich der Systeme Fülltrichter (1), Dosiergeräz (14) und Zone (A) eine praktisch luftfreie Wasserdampfatmosphäre geschaffen war. Der Dampf wurde ständig über den Trichter (1) ins Freie geleitet, teilweise durchzog er aber auch -begleitet von partieller Kondensation- den gesamten Expander bis zur Beruhigungszone (7).

Sobald eine reine Dampfatmosphäre geschaffen war, wurde mit der Einbringung des Flockenmaterials (S) begonnen und die Anlage durch Regelung des Dosiergeräts und der Fördergeschwindigkeit der Schnecke auf eine Material-Fließgeschwindigkeit von 300 kg/Min. (Durchsatz) eingestellt. Dabei wurde die Dampfzufuhr über Leitung (10) nicht unterbrochen, sie konnte jedoch erheblich gedrosselt werden.

Nachdem sich durch den Masseeigendruck (als Funktion der Drehgeschwindigkeit der Schneckenwelle (3), der Verdichtung durch die kleiner werdenden Ganggrößen (4,2,5) und die Scherwirkung der Schneckenbolzen bzw. -noppen) am Anfang der Zone (B) ein Druck von ($p_a$) = 3,4 bar sowie am Ende der Zone (B) ein Druck von ($p_e$) von 8,0 bar eingestellt hatte, wurde über die Stutzen (13) und über die Zone (B) verteilt -teilweise auch in den Beginn der Zone (C) hinein- soviel Hochdruck-Wasserdampf eingedrückst, daß das Material im angegebenen Druckbereich eine Temperatur von 130°C aufwies. Dampfmenge und Dampfdruck bzw. Dampftemperatur wurden auf diesen Material-Temperaturwert eingestellt.

Im weiteren Verlauf des Materialtransports durch die Behandlungsanlage stieg der Massedruck bis ($p_m$) = 18 bar an. Dieser Wert wurde kurz vor dem Scherspalt (6), also gegen Ende der Zone (C) und vor der Matritze (20) ermittelt.

Im vorliegenden beispielhaften Falle war als Abschluß des Scherspalts (6) -und damit der Zone (C)- vor den Endkopf der Schneckenwelle (3) eine Vielloch-Scheibe (20) mit Loch-Durchmessern von ca. 3,8 mm eingesetzt. Das durch die Lochscheibe austretende, heiße Material -das im übrigen bedingt durch die Flash-Verdampfung einen Dampfschleier vor sich herschob- gelangte anschließend direkt in eine mit Wasserdampf von Atmosphärendruck gefüllte Beruhigungszone bzw. Heißhaltezone (7) und von hier nach einer Verweilzeit von ca. 2 Min. über eine Austragschnecke (18) kontinuierlich als Endprodukt der thermischen Vorbehandlung (E) in eine -nicht dargestellte- Kühl- und Trockeneinheit.

Die Zone (7) war so ausgelegt, daß sie mindestens 20 Vol.-% des in der Zeiteinheit in den Expander eingebrachten Materials aufnehmen konnte.

Das Material hatt vor der Matritze (20) eine Temperatur von max. 145°C, im Schnitt lag die Temperatur nicht unter 130°C. Beim Einfallen in die Beruhigungszone (7) kühlte sich das Material weiter ab. Nach ca. 2 Min. in dieser Zone und anschließender Kühlung und Trocknung stellte sich eine Temperatur von ca. 55°C ein. Der Wassergehalt betrug ca. 10,5 Gew.-%; das Schüttgewicht lag bei ca. 520 kg/m$^3$.

In einem Versuchsextrakteur wurde diese Gut mit Hexan bei ca. 66°C im Gegenstrom extrahiert, wobei bekannte Bedingungen bezüglich Konzentration (Miscella) aufrecht erhalten wurden. Die Gesamt-Rohölausbeute wurde mit 99,2 % (Restöl im Schrot) ermittelt. Der Gesamtphosphatidgehalt des Rohöls vor der weiteren Behandlung (Entschleimung etc.) betrug ca. 4,48 Gew.-%.

In einem anschließenden Entschleimungsprozess (Hydratisierung und Flockung) wurden die zunächst kolloidal gelösten Phosphatide abgetrennt. Dabei stellte sich überraschenderweise heraus, daß bereits durch die an sich bekannte Stufe der Hydratisierung (mit Wasser bzw. Wasserdampf bzw. schwach saurem wässrigem Medium bei höherer Temperatur) mit Fällung und Trennung des Niederschlags ein Öl erhalten wird, das nur nach ca. 0,025 Gew.-% Phosphatide aufweist.

Bei der klassischen Wärmebehandlung in Wärmepfannen und anschließenden Extraktion werden dagegen im Rohöl ca. 2,0 bis 2,5 Gew.-% Phosphatide gefunden und der Phosphatidgehalt nach der Entschleimung liegt im Schnitt bei 0,3 bis 0,8 Gew.-%. Solche Öle können nicht unter wirtschaftlichen Bedingungen raffiniert werden. Sie erfordern daher eine Alkalibehandlung um (die Öle) genußfähig zu machen.

Das neue Verfahren führt zu einer gesteigerten Lezithingewinnung und damit verbunden einen geringeren Lezithingehalt im Rohöl nach der Entschleimung. Hierdurch ist es möglich, das Öl nach einer Bleicherdebehandlung physikalisch optimal zu raffinieren, sodaß die bekannt hohen Kosten für die Raffination erheblich gesenkt und die mit der Raffination verbundenen Abwasserprobleme optimal bewältigt werden.

Wie die Ergebnisse zeigen, kann gegenüber bekannten Verfahren allein durch die Hydratisierung der Phosphatidabbau im Öl um nahezu 40 % gesteigert werden.

Die Säurefällung der Restphosphatide führt gemäß der Erfindung zu einem Öl, das nur noch ca. 16 ppm dieser Begleitstoffe enthält. Nach der Bleicherdebehandlung ergab sich ein vollkommen blankes, phosphatidfreies (über den Gesamtphosphor ermittelt) Speiseöl von blass-gelber Farbe.

Das vom Öl abgetrennte Phosphatidgemisch wurde durch Wasserbehandlung und Wasserverdampfung weiterbehandelt und ergab ein Reinlezithin bester Qualität hinsichtlich Farbe, Geruch und Geschmack. Es konnte sofort der direkten Weiterverwertung für den Nahrungs- und Pharmaziesektor zugeführt werden.

Neben den vorstehend zusammengefaßten Verbesserungen der Produktqualitäten und -ausbeuten sind als weitere Vorteile des neuen Verfahrens vor allem die hohe Energieeinsparung beim Betrieb der Glattwalzen zur Flockengewinnung - bisher übliche Plättchenstärke ca. 0,2 bis 0,3 mm; gemäß der Erfindung ca. 0,4 bis 0,6 mm- die Dampf- und Energieeinsparung gegenüber den üblichen, großvolumigen Wärmepfannen bzw. Wärmetürmen, die zeitliche Verkürzung der thermischen Behandlung insgesamt, die produktschonende Behandlung im (Druck-)Expansionssystem bei hoher Temperatur und -sauerstofffreier- Wasserdampfatmosphäre sowie die Verbesserungen bei der Perkolation und Extraktion im Hinblick auf den Durchsatz pro Zeiteinheit zu nennen.

**Patentansprüche**

1. Verfahren zur thermischen Konditionierung von Ölsaaten und Ölfrüchten, insbesondere Leguminosesamen und verwandten pflanzlichen Rohstoffen, wobei dieses Material gegebenenfalls nach Reinigung, Trocknung und Mahlung einem Extraktions- und/oder Preßvorgang unterworfen und nach Trennung und Aufarbeitung ein für Speisezwecke geeignetes Öl bzw. Fett sowie ein als Kraftfutter verwertbarer Rückstand, das Schrot, erhalten wird und dem Extraktions- und/oder Preßvorgang eine Konditionierung vorgelagert ist, wobei das Material kurzzeitig auf Temperaturen über 100°C und überatmosphärischen Druck in sauerstofffreier, insbesondere wasserdampfhaltiger Atmosphäre erhitzt wird, dadurch gekennzeichnet, daß die Behandlungszeit für die thermische Konditionierung, die bei 2,0 bis 25 bar durchgeführt wird, zwischen 0,1 und 5,0 Sekunden liegt und das Material nach Ablauf der vorgegebenen Zeitspanne schlagartig entspannt und auf Temperaturen unter 100°C abgekühlt wird.

2. Verfahren nach Anspruch 1, dadurch gekennzeichnet, daß die Behandlungstemperatur zwischen 105 und 148°C liegt.

3. Verfahren nach Ansprüchen 1 und 2, dadurch gekennzeichnet, daß der Behandlungsdruck vor der schlagartigen Entspannung bei 4,0 bis 18,0 bar und bevorzugt bei 5,0 bis 10,0 bar liegt.

4. Verfahren nach Anspruch 3, dadurch gekennzeichnet, daß der Behandlungsdruck durch Hochdruck-Wasserdampf erzeugt wird.

5. Verfahren nach einem der Ansprüche 1 bis 4, dadurch gekennzeichnet, daß die gesamte Behandlung in Wasserdampfatmosphäre durchgeführt wird.

6. Verfahren nach einem der Ansprüche 1 bis 5, dadurch gekennzeichnet, daß die schlagartige Entspannung des Materials im Anschluß an die Erreichnung des Maximaldrucks in eine mit Wasserdampf beschickte Vorlage erfolgt.

7. Verfahren nach einem der Ansprüche 1 bis 6, dadurch gekennzeichnet, daß das entspannte Material nachgekühlt und/oder getrocknet wird.

8. Verfahren nach Anspruch 7, dadurch gekennzeichnet, daß das entspannte Material durch Druckminderung bzw. Vakuum in der Vorlage nachgekühlt und/oder nachgetrocknet wird und dabei auf die Extraktionstemperatur von 50 bis 65°C eingestellt wird.

9. Verfahren nach einem der Ansprüche 1 bis 8, dadurch gekennzeichnet, daß die thermische Konditionierung im Anschluß an die Pressung und vor der Extraktion erfolgt.

10. Verfahren nach einem der Ansprüche 1 bis 8, dadurch gekennzeichnet, daß die thermische Konditionierung vor der Pressung und vor der anschließenden Extraktion erfolgt.

11. Verfahren nach einem der Ansprüche 1 bis 8, dadurch gekennzeichnet, daß die thermische Konditionierung mehrfach erfolgt und zwar bevorzugt einmal vor der Pressung und einmal zwischen Pressung und Extraktion.

12. Verfahren nach Ansprüchen 1 bis 11, dadurch gekennzeichnet, daß Leguminosesamen behandelt werden.

13. Verfahren nach Anspruch 12, dadurch gekennzeichnet, daß Sojabohnenmaterial behandelt wird.

14. Vorrichtung zur Durchführung des Verfahrens nach Ansprüchen 1-13, die als geschlossenes System ausgebildet ist, mit hintereinander angeordneter Materialeinzugszone bzw. Druckaufbauzone (A,B), Hochdruckzone (C) und Entspannungszone (D,6,21,7), mit Einrichtungen (1) zur kontinuierlichen Materialaufgabe, mit Einlaßdüsen (10) für Wasserdampfatmosphäre in der Materialeinzugs- bzw. Druckaufbauzone (A,B), mit Einlaßdüsen (13) für Hochdruckwasserdampf in der Hochdruckzone (C), mit die jeweiligen Zonen in Materialdurchlaufrichtung verbindenden Förderelementen (3,12), und mit einer druckaufbauenden Förderschnecke, Extruder oder Expander (3,12) für die Druckaufbauzone (A,B) und die Hochdruckzone (C), wobei sich die Ganggrößen (4,2,5) der Schneckenwindungen (12) von der Druckaufbauzone (A,B) in Richtung der Kochdruckzone (C) stufenweise verjüngen und sich der Übergang von der größten Ganggröße (4) in die kleinste Ganggröße (5) in der Druckaufbauzone (B) befindet, mit Einrichtungen (18) für kontinuierlichen Materialabzug und einem Anpreßkopf (40,240) mit Gegendruckelement (110,210) am Austragsende (6,12,18,140) der Hochdruckzone (C).

15. Vorrichtung nach Anspruch 14, gekennzeichnet durch einen Scherspalt (6) und ein auswechselbares Formwerkzeug (Matrize) (20) am Austragsende der Förderschnecke (3,12) bzw. am Ende der Hochdruckzone (C).

16. Vorrichtung nach Anspruch 15, gekennzeichnet durch eine Matrize (20), die als Lochscheibe ausgebildet ist.

17. Vorrichtung nach Ansprüchen 14-16, gekennzeichnet durch Noppen oder Bolzen (19) in den Gangräumen (4,2,5) der Fördereinrichtung (3,12).

18. Vorrichtung nach Ansprüchen 14-17, gekennzeichnet durch Heiz- oder Kühlelemente (22) im Bereich der Fördereinrichtung (3,12).

19. Vorrichtung nach Ansprüchen 14-18, gekennzeichnet durch einen Anpreßkopf (40,240) mit Gegendruckelement (110,210) im Anschlußbereich der Matrizenscheibe (300,230).

13

**20.** Vorrichtung nach Ansprüchen 14-19, gekennzeichnet durch ein Gegendruckelement (110,210), das als Federelement (110), insbesondere als Tellerfeder, als hydraulisches Werkzeug (210,220) oder als pneumatisch oder elektrisch betriebenes Werkzeug ausgebildet ist.

**21.** Vorrichtung nach Ansprüchen 14-20, gekennzeichnet durch einen Anpreßkopf (40,240), der kugelförmig, konisch, kegelförmig, eben, spitz oder kugelsegmentförmig ausgebildet ist.

**22.** Vorrichtung nach Anspruch 21, gekennzeichnet durch Einkerbungen (50',250') im Anpreßkopf (40,240) zur Aufnahme von Messern (50,250).

**23.** Vorrichtung nach Ansprüchen 14-22, dadurch gekennzeichnet, daß der Anpreßkopf (40,240) und das Gegendruckelement (110,210) derart aufeinander einstellbar sind, daß ein Druck (p'') des Gegendruckelements (110,210) dem Druck (P) in der Hochdruckzone (C) solange entgegenwirkt, bis die Forderung P>P'' erfüllt ist, so daß sich der Anpreßkopf (40,240) von der Austrittsöffnung (140) des Förderelements (3,12) trennt und nach Einstellung der Druckgleichheit P = P'' oder nach erstmaligem Auftreten der Beziehung P>P'' der Anpreßkopf (40,240) durch den nunmehr gegenüber P höheren Gegendruck P'' wieder in Schließposition gebracht wird (150,150') oder sich ein Gleichgewicht P = P'' einstellt, das einen konstanten Materialaustritt bei gegebenem Druck zur Folge hat.

**24.** Vorrichtung zur Durchführung des Verfahrens nach Ansprüchen 1-13, die als geschlossenes System ausgebildet ist, mit hintereinander angeordneter Materialeingangs- bzw. Druckaufbauzone (24), Hochdruckzone (25) und Entspannungszone (29), mit Einrichtungen (1) zur kontinuierlichen Materialaufgabe, mit Einlaßdüsen (10,30) für Wasserdampfatmosphäre in der Materialeingangs- bzw. Druckaufbauzone (24), mit Einlaßdüsen (13) für Hochdruckwasserdampf in der Hochdruckzone (25), und mit die jeweiligen Zonen in Materialdurchlaufrichtung verbindenden Förderelementen (24,29), die gleichzeitig auch als Druckaufbauzonen dienen und die als Schnecken oder Preß-Schnecken oder als expanderähnliche Schnecken ausgebildet sind, während die Hochdruckzone (25) als zylindrischer Druckbehälter vorliegt, mit Einrichtungen (18) für kontinuierlichen Materialabzug, und mit Einlaßdüsen (30) für Wasserdampfatmosphäre auch in der Entspannungszone (29), die mindestens eine Förderschnek-

ke aufweist.

**25.** Vorrichtung nach Anspruch 24, gekennzeichnet durch eine Vorlage (7) im Anschluß an die Entspannungszone (29) sowie ein vakuumerzeugendes System (34).

**Claims**

**1.** Process for the heat treatment of oil seeds and oleaginous fruits, particularly legume seeds and related plant raw materials, whereby this material is subjected, after cleaning, drying and grinding, where applicable, to an extraction and/or pressing operation and, after separation and processing, an oil or fat which can be used as a foodstuff, and a residue, the coarse meal, which can be used as a concentrate, are obtained and whereby a conditioning process precedes the extraction and/or pressing operation during which the material is heated for a short time to temperatures of over 100°C and at above atmospheric pressure in an atmosphere which is free from oxygen and in particular one containing steam, characterized in that the treatment time for the heat treatment, which is carried out at 2.0 to 25 bar, is between 0.1 and 5.0 seconds and in that the material after the completion of the predetermined period is detensioned suddenly and cooled to temperatures of below 100°C.

**2.** Process according to claim 1, characterized in that the treatment temperature is between 105 and 148°C.

**3.** Process according to claims 1 and 2, characterized in that the treatment pressure before the sudden detensioning is between 4.0 and 18.0 bar and preferably between 5.0 and 10.0 bar.

**4.** Process according to claim 3, characterized in that the treatment pressure is produced by high-pressure steam.

**5.** Process according to one of claims 1 to 4, characterized in that the complete treatment is carried out in a steam atmosphere.

**6.** Process according to one of claims 1 to 5, characterized in that the sudden detensioning of the material takes place following the reaching of the maximum pressure in a reception unit charged with steam.

**7.** Process according to one of claims 1 to 6, characterized in that the detensioned material is subsequently cooled and/or dried.

8. Process according to claim 7, characterized in that the detensioned material is subsequently cooled and/or dried in the reception unit by a reduction in pressure or vacuum and, at the same time, set to the extraction temperature of 50 to 65°C.

9. Process according to one of claims 1 to 8, characterized in that the heat treatment takes place following the pressing operation and before the extraction operation.

10. Process according to one of claims 1 to 8, characterized in that the heat treatment takes place before the pressing operation and before the following extraction operation.

11. Process according to one of claims 1 to 8, characterized in that the heat treatment is effected in multiple operations and preferably once before the pressing operation and once between the pressing operation and the extraction operation.

12. Process according to claims 1 to 11, characterized in that legume seeds are treated.

13. Process according to claim 12, characterized in that soya bean material is treated.

14. Apparatus for carrying out the process according to claims 1-13 which is constructed as a closed system with a material inlet zone or pressure formation zone (A,B), high pressure zone (C) and detensioning zone (D,6,21,7) arranged in sequence, with units (1) for the continuous feeding of the material, with inlet nozzles (10) for the steam atmosphere in the material inlet or pressure formation zone (A,B), with inlet nozzles (13) for high pressure steam in the high pressure zone (C), with the conveying units (3,12) connecting the corresponding zones in the direction of the material throughflow and with a pressure-forming worm conveyor, extruder or expander (3,12) for the pressure formation zone (A,B) and the high-pressure zone (C), whereby the thread sizes (4,2,5) of the spirals (12) are reduced in stages from the pressure formation zone (A,B) in the direction of the high-pressure zone (C) and the transition from the largest thread size (4) to the smallest thread size (5) is located in the pressure formation zone (B), with units (18) for the continuous removal of the material and with a contact pressure head (40,240) with a counterpressure component (110,210) at the discharge end (6,12,18,140) of the high pressure zone (C).

15. Apparatus according to claim 14, characterized by a shear gap (6) and an interchangeable form tool (die) (20) at the discharge end of the worm conveyor (3,12) or at the end of the high pressure zone (C).

16. Apparatus according to claim 15, characterized by a die (20) which is constructed as a perforated disk.

17. Apparatus according to claims 14-16 characterized by knobs or pins (19) in the thread spaces (4,2,5) of the conveying unit (3,12).

18. Apparatus according to claims 14-17 characterized by heating or cooling components (22) in the area of the conveying unit (3,12).

19. Apparatus according to claims 14-18 characterized by a contact pressure head (40,240) with a counterpressure component (110,210) in the connection area of the die disk (300,230).

20. Apparatus according to claims 14-19 characterized by a counterpressure component (110,210) which is constructed as a spring component (110), particularly as a cup spring, as a hydraulic tool (210,220) or as a pneumatically or electrically operated tool.

21. Apparatus according to claims 14-20 characterized by a contact pressure head (40,240) which is constructed in the shape of a ball, with a conical shape, with a tapered shape, with a plane shape, with a pointed shape or with a spherical segment shape.

22. Apparatus according to claim 21, characterized by indents (50',250') in the contact pressure head (40,240) for taking up knives (50,250).

23. Apparatus according to claims 14-22, characterized in that the contact pressure head (40,240) and the counterpressure component (110,210) can be set in relation to each other in such a way that a pressure (p'') of the counterpressure component (110,210) counteracts the pressure (P) in the high pressure zone (C) until the requirement p>p'' is met, so that the contact pressure head (40,240) is separated from the outlet opening (140) of the conveying unit (3,12) and after setting of the pressure equality P = P'' or after the first occurence of the relationship P>P'' the contact pressure head (40,240) is again brought into the closed position (150,150') through the counterpressure P'' which is now greater in relation to P or an equilibrium P = P'' is set which results in a constant material exit at given pressure.

24. Apparatus for carrying out the process in accordance with claims 1-13, which is constructed as a closed system with a material inlet or pressure formation zone (24), a high pressure zone (25) and a detensioning zone (29) arranged in sequence, with units (1) for the continuous feeding of the material, with inlet nozzles (10,30) for steam atmosphere in the material inlet or pressure formation zone (24), with inlet nozzles (13) for high pressure steam in the high pressure zone (25) and with conveying units (24,29) which connect the corresponding zones in the direction of material throughflow, which at the same time act as pressure formation zones and which are constructed as worms or screw presses or expander-type worms, whilst the high-pressure zone (25) is provided as a cylindrical pressure vessel, with units (18) for the continuous removal of material and with inlet nozzles (30) for a steam atmosphere also in the detensioning zone (29), which is provided with at least one worm conveyor.

25. Apparatus according to claim 24, characterized by a reception unit (7) connected to the detensioning zone (29) and by a vacuum generating system (34).

## Revendications

1. Procédé de conditionnement thermique de graines oléagineuses et de fruits oléagineux, en particulier de graines de légumineuses et de matières premières végétales apparentées, procédé dans lequel cette matière première est soumise, éventuellement après nettoyage, séchage et mouture, à une opération d'extraction et/ou de pressage et il est obtenu, après séparation et traitement ultérieur, une huile ou une graisse qui convient à des fins alimentaires, ainsi d'un résidu - le tourteau - utilisable comme aliment concentré, l'opération d'extraction et/ou de pressage étant précédée d'un conditionnement dans lequel la matière est chauffée brièvement à des températures de plus de 100°C et sous une pression supérieure à la pression atmosphérique, dans une atmosphère exempte d'oxygène, en particulier dans une atmosphère contenant de la vapeur d'eau, caractérisé en ce que la durée de traitement pour le conditionnement thermique, qui est effectué sous une pression de 2,0 à 25 bar, est comprise entre 0,1 et 5,0 s, et en ce qu'à l'expiration du laps de temps prescrit, la matière est détendue brusquement et refroidie à des températures inférieures à 100°C.

2. Procédé selon la revendication 1, caractérisé en ce que la température de traitement se situe entre 105 et 148°C.

3. Procédé selon la revendication 1 ou 2, caractérisé en ce que la pression de traitement, avant la détente brusque, est de l'ordre de 4,0 à 18,0 bar, de préférence de l'ordre de 5,0 à 10,0 bar.

4. Procédé selon la revendication 3, caractérisé en ce que la pression de traitement est créée par de la vapeur d'eau sous haute pression.

5. Procédé selon l'une quelconque des revendications 1 à 4, caractérisé en ce que le traitement complet est conduit dans une atmosphère de vapeur d'eau.

6. Procédé selon l'une quelconque des revendications 1 à 5, caractérisé en ce que la détente brusque de la matière est effectuée immédiatement après qu'a été atteinte la pression maximale dans un récipient chargé de vapeur d'eau.

7. Procédé selon l'une quelconque des revendications 1 à 6, caractérisé en ce que la matière détendue est refoidie davantage et/ou séchée.

8. Procédé selon la revendication 7, caractérisé en ce que la matière détendue est refroidie et/ou séchée davantage par diminution de pression ou création de vide dans le récipient, et elle est ainsi réglée à la température d'extraction de 50 à 65°C.

9. Procédé selon l'une quelconque des revendications 1 à 8, caractérisé en ce que le conditionnement thermique est effectué à la suite du pressage et avant l'extraction.

10. Procédé selon l'une quelconque des revendications 1 à 8, caractérisé en ce que le conditionnement thermique est effectué avant le pressage et avant l'extraction qui fait suite à celui-ci.

11. Procédé selon l'une quelconque des revendications 1 à 8, caractérisé en ce que le conditionnement thermique est effectué plusieurs fois, à savoir de préférence une fois avant le pressage et une fois entre le pressage et l'extraction.

12. Procédé selon l'une quelconque des revendications 1 à 11, caractérisé en ce que des graines de légumineuses sont traitées.

13. Procédé selon la revendication 12, caractérisé en ce qu'une matière tirée de graines de soja est traitée.

14. Dispositif pour l'exécution du procédé selon l'une quelconque des revendications 1 à 13, réalisé sous forme de système fermé et comprenant, à la suite l'une de l'autre, une zone d'introduction de la matière ou zone d'établissement de pression (A,B), une zone de haute pression (C) et une zone de détente (D,6,21,27), avec des dispositifs (1) pour l'alimentation continue en matière, avec des buses d'admission (10) pour créer l'atmosphère de vapeur d'eau dans la zone d'introduction de la matière ou d'établissement de la pression (A,B), avec des buses d'admission (13) pour la vapeur d'eau sous haute pression dans la zone de haute pression (C), avec des éléments transporteurs (3,12) reliant les différentes zones dans la direction de passage de la matière, et avec une vis transporteuse, une extrudeuse ou un expanseur de volume (3,12) générateur de pression pour la zone d'établissement de pression (A,B) et la zone de haute pression (C), les hauteurs des spires (4, 2,5) de la vis transpporteuse (12) diminuant par gradins à partir de la zone d'établissement de pression (A,B) en direction de la zone de haute pression (C), et la transition entre la plus grande hauteur de spires (4) et la plus petite hauteur de spires (5) se trouvant dans la zone d'établissement de pression (B), avec des dispositifs (18) pour l'extraction continue de matière, et avec une tête de contact pressé (40,240) munie d'un élément de contre-pression (110,210) à l'extrémité de sortie (6,12,18,140) de la zone de haute pression (C).

15. Dispositif selon la revendication 14, caractérisé par une fente de cisaillement (6) et un outil de formage (matrice) (20) interchangeable à l'extrémité de sortie de la vis transporteuse (3,12) ou à l'extrémité de la zone de haute pression (C).

16. Dispositif selon la revendication 15, caractérisé par une matrice (20) qui est réalisée sous forme de disque perforé.

17. Dispositif selon l'une quelconque des revendications 14 à 16, caractérisé par des mamelons ou chevilles (19) dans les espaces entre spires (4,2,5) du dispositif transporteur (3,12).

18. Dispositif selon l'une quelconque des revendications 14 à 17, caractérisé par des éléments de chauffage ou de refroidissement (22) dans la région du dispositif transporteur (3,12).

19. Dispositif selon l'une quelconque des revendications 14 à 18, caractérisé par une tête de contact pressé (40,240) munie d'un élément de contre-pression (110,210) dans la région de raccordement du disque-matrice (300,230).

20. Dispositif selon l'une quelconque des revendications 14 à 19, caractérisé par un élément de contre-pression (110,210) qui est réalisé sous forme d'élément à ressort (110), en particulier de ressort à disques, sous forme d'outil hydraulique (210,220) ou sous forme d'outil actionné pneumatiquement ou électriquement.

21. Dispositif selon l'une quelconque des revendications 14 à 20, caractérisé par une tête de contact pressé (40,240) qui est réalisée sous forme sphérique, conique, plane, en pointe ou sous forme de segment sphérique.

22. Dispositif selon la revendication 21, caractérisé par des entailles (50',250') dans la tête de contact pressé (40,240) pour recevoir des couteaux (50, 250).

23. Dispositif selon l'une quelconque des revendications 14 à 22, caractérisé en ce que la tête de contact pressé (40,240) et l'élément de contre-pression (110,210) sont réglables l'une par rapport à l'autre de telle sorte qu'une pression (P'') de l'élément de contre-pression (110,210) s'oppose à la pression (P) dans la zone de haute pression (C) jusqu'à ce que la condition P>P'' soit satisfaite, ce qui fait que la tête de contact pressé (40,240) se sépare de l'orifice de sortie (140) de l'élément transporteur (3, 12), et qu'après l'établissement de l'équilibre de pression P = P'' ou après la première apparition de la relation P>P'', la tête de contact pressé (40,240) soit ramenée en position de fermeture (150,150') par la contre-pression P'' désormais plus élevée que P, ou qu'il s'établisse un équilibre P = P'' qui a pour conséquence une sortie constante de matière à la pression prescrite.

24. Dispositif pour l'exécution du procédé selon l'une quelconque des revendications 1 à 13, réalisé sous forme de système fermé et comprenant, à la suite l'une de l'autre, une zone d'

introduction de la matière ou zone d'établissement de pression (24), une zone de haute pression (25) et une zone de détente (29), avec des dispositifs (1) pour l'alimentation continue en matière, avec des buses d'admission (10,30) pour créer l'atmosphère de vapeur d'eau dans la zone d' introduction de la matière ou d'établissement de la pression (24), avec des buses d'admission (13) pour la vapeur d'eau sous haute pression dans la zone de haute pression (25), et avec des éléments transporteurs (24,29) qui relient les différentes zones dans la direction de passage de la matière, servent en même temps de zones d'établissement de la pression et sont réalisés sous forme de vis sans fin ou de vis à pression ou sous forme de vis semblables à un expanseur de volume, tandis que la zone de haute pression (25) est réalisée sous forme de récipient de pression cylindrique, avec des dispositifs (18) pour l'extraction continue de matière, et avec des buses d'admission (30) pour créer également une atmosphère de vapeur d'eau dans la zone de détente (29), qui comporte au moins une vis transporteuse.

25. Dispositif selon la revendication 24, caractérisé par un récipient (7) à la suite de la zone de détente (29), ainsi que par un système générateur de vide (34).

Fig.1

Fig.2

Fig.3

Fig.4

Fig. 5

EP 0 212 391 B1

Fig.6

Fig.7a

Fig.7

Fig. 8

-a-    -b-    -c-

Fig.9

_Fig. 10_